# EUROPEAN PATENT SPECIFICATION

(11) **EP 4 529 657 B1**
(45) Date of publication and mention of the grant of the patent: **11.03.2026**
(21) Application number: 23735097.0
(22) Date of filing: 18.05.2023
(51) Int. Cl.: G06Q 10/083

(54) **PACKAGE LOCATION SERVICES AND ROUTING**
PAKETORTUNGSDIENSTE UND ROUTING
SERVICES DE LOCALISATION DE COLIS ET ROUTAGE

(30) Priority: 23.05.2022 US 202217750869
(43) Date of publication of application: 02.04.2025
(73) Proprietor: FedEx Dataworks Inc., Memphis, TN 38125 (US)
(72) Inventor: LERNER, Jeremy, Southfield, Michigan 48075 (US); GANDENBERGER, Gregory, Mt. Prospect, Illinois 60056 (US)
(74) Representative: Fish & Richardson P.C.
(86) International application number: PCT/US2023/022703
(87) International publication number: WO 2023/229911

(56) References cited:
- US-A1- 2016 117 630
- US-A1- 2018 268 348
- US-A1- 2022 101 259

## Description

### TECHNICAL FIELD

This disclosure generally related to data processing.

### BACKGROUND

Package shipping companies and operators can manage millions of packages per month. Packaging processing is performed to confirm postage data, check safety of packages, and ensure packaging matches the label, among other examples. Deliveries can be organized according to a schedule of transportations between different locations within a shipment network. Different transportation hubs or facilities can be defined within a shipment network to support delivery and pick-up of packages. The different transportation hubs are connected through different modes and transfers of packages can be executed according to a predefined schedule or on-demand. The transport modes can include trains, air flights, ferries, cars, vans, ships, and boats, among other example transportation modes. A package can be routed from an initial shipping location through one or more other intermediary locations within a shipment network to reach a destination location defined for the package. Usually packages include a label that includes shipment data such as name and address of the sender and the recipient, routing code to inform how to route the package, and potentially other information.

US2016117630A1 discloses a system for identifying "orphaned" packages whose shipping labels are damaged or missing. Weight, size, range, and image data of the orphaned package are captured and compared with stored package data to generate a candidate list of possible matches. As other packages are scanned and identified, they are removed from the list until only the true orphaned package remains, which is then re-labelled and routed to its destination.

### SUMMARY

Implementations of the present disclosure are directed to identification and routing of a package that has a damaged shipping label and is shipped through a shipping network to the appropriate destination location. The identification can be based on analysis of data collected for the package and for other packages that are already scanned (e.g., a label of a package is scanned by a machine or other automated tool for collecting digital footprint of the package) at other location of the shipping network and have not been identified as reached their destination point. In some implementations, data collected for the other packages can be collected through either automatic scanning of a machine or through user interactions with a tool to collect the data for the packages.

In one aspect, the invention provides a computer-implemented method according to claim 1. In further aspects, the invention provides a corresponding system according to independent claim 14 and one or more computer storage media according to independent claim 15.

In some implementations, identifying the particular package includes identifying, based on providing an image of the first packages and images of the subset of possible matches as input to a machine learning model trained for image recognition, the particular package that matches the first package.

In some implementations, identifying the particular package includes evaluating the first data and the second data by applying a first algorithm of the one or more identification algorithms. The application of the first algorithm can include matching a first portion of the first data with a first portion of the second data, both first portions associated with a first characteristic from a set of characteristics of the first package. In response to the matching, a first subset of the plurality of packages that substantially match the first package according to the first characteristic can be determined. In response to determining that the first subset of the plurality of packages includes a set of packages within a predetermined threshold number, the first subset is provided as input to a machine learning model to identify the particular package that matches the first package from the subset. The machine learning model can be trained to identify the particular package based on image recognition.

In some implementations, applying the one or more identification algorithms includes applying a plurality of identification algorithms in a sequence, wherein at each step in the sequence, a respective set of data from the second data for the plurality of packages is evaluated, the respective set being associated with i) a respective characteristic that is evaluated and ii) previously determined subset of packages from the plurality of packages at a previous step in the sequence that matches the first package according to a previously evaluated characteristic of the first package. In some implementations, at each step in the sequence, a characteristic of the first package is evaluated. The characteristic can be selected from a group consisting of package weight, package colors, package scan order, package dimensions, outer surface markings, and expected package shipping route. A respective characteristic is selected for determining an identification algorithm for evaluation of the first data and second data based on the respective characteristic.

In some implementations, each identification algorithm can be arranged in the sequence according to a different computational complexity based at least on a number of packages provided as input for the identification algorithm from a previous iteration. In some implementations, the identification algorithms are ordered in the sequence according to increasing computational complexity.

In some implementations, the first data and the second data are collected for a set of characteristics of packages routed through the shipping network and associated with a respective location at the shipping network. In some implementations, applying the one or more identification algorithms includes evaluating the first data and the second data based on a respective one or more characteristics of the first package. Based on the evaluation of the first data and the second data, a set of packages are determined as a candidate set of packages that match the first package based on the respective one or more characteristics.

In some implementations, applying the one or more identification algorithms includes applying a package weight analysis that includes: comparing a weight of the first package included in the first data with weights of other packages included in the second data; and excluding from the subset of possible matches any packages within the plurality of packages having a respective weight that does not match the weight of the first package within weight threshold range defined around the weight of the first package.

In some implementations, applying the one or more identification algorithms includes applying a package scan order analysis that includes: comparing an order of loading the first package into a shipping vehicle or shipping container with unloading orders of other packages of the plurality of packages from the shipping vehicle or shipping container; and excluding from the subset of possible matches any packages within the plurality of packages having a respective unloading order that is not within a threshold range of an expected unloading order for the first package based on the order of loading the first package into a shipping vehicle or shipping container.

In some implementations, applying the one or more identification algorithms include applying a package color analysis that include: comparing a first set of colors present within an image of the first package with sets of colors present within images of other packages of the plurality of packages; and excluding from the subset of possible matches any packages within the plurality of packages having a respective set of colors outside a threshold similarity value to the first set of colors present within the image of the first package. In some implementations, comparing the first set of colors present within an image of the first package with sets of colors present within images of other packages of the plurality of packages includes determining Bhattacharyya distances between pixel values of the image of the first package with respective pixel values of the images of the other packages. Excluding from the subset of possible matches any packages within the plurality of packages having the respective set of colors outside the threshold similarity value to the first set of colors present within the image of the first package includes excluding from the subset of possible matches any packages within the plurality of packages having a respective Bhattacharyya distance greater than a threshold Bhattacharyya distance.

In some implementations, comparing the first set of colors present within an image of the first package with sets of colors present within images of other packages of the plurality of packages includes identifying regions within the images of the other packages containing package labels and ignoring pixels in the regions when performing the comparison.

In some implementations, comparing the first set of colors present within an image of the first package with sets of colors present within images of other packages of the plurality of packages includes: identifying label regions within the images of the other packages which include package labels; and comparing a respective label region within each of the images of the other package to a region within the image of the first package including a location on the first package that is positioned similar to a location of the respective label region and, thereby, determine whether the region within the image of the first package includes any indicia of damage.

In some implementations, applying the one or more identification algorithms includes applying a package dimension analysis that includes: comparing a first set of package dimensions determined from an image of the first package with sets of package dimensions determined from images of other packages of the plurality of packages; and excluding from the subset of possible matches any packages within the plurality of packages having a respective set of package dimensions outside a threshold dimension similarity value to the first set of package dimensions determined from the image of the first package. In some implementations, the package dimension analysis can further includes: determining the first set of package dimensions from the image of the first package by projecting a set of three-dimensional package models onto the image of the first package to identify a best fit between one of the package models and the first package within the image of the first package; and applying dimensions of the one of the package models as the first set of package dimensions.

In some implementations, applying the one or more identification algorithms includes applying a distinguishing feature analysis that includes: identifying a first set of one or more features on the first package from an image of the first package, the features including one or more of marks, scratches, holes, or text; comparing the first set of one or more features with images of other packages of the plurality of packages; and excluding from the subset of possible matches any packages within the plurality of packages that do not have at least one of the one or more of the features detected on the first package.

In some implementations, applying the one or more identification algorithms includes applying a shipping route analysis that includes: obtaining a location of a shipping facility within the shipping network where the first package was identified as having the label that is damaged; determining possible delivery patterns for other packages of the plurality of packages; excluding from the subset of possible matches any packages within the plurality of packages that do not include the location within a respective expected delivery pattern.

In some implementations, determining the expected delivery patterns for other packages includes determining the other packages from the plurality of package as packages that are associated with respective locations of shipping facilities within the shipping network that are with a direct shipping connection with the location of the first package or with a single intermediate location between a respective location of a package from the other package and the location of the first package.

In some instances, the shipping network is a network graph including a plurality of nodes representing locations to deliver and pick-up packages, wherein the network graph includes a plurality of direction edges representing connections between pairs of locations, wherein based on the network graph, a plurality of routes connecting at least some of the nodes is defined.

Another, second example of a method may include operations such as: obtaining first data for a first package within a shipping network, wherein the first package includes a label that is damaged and prevents automatic identification of the first package based on the label; obtaining second data for a plurality of packages within the shipping network; identifying a particular package from a plurality of packages by: applying, in a sequence, a plurality of identification algorithms to the first data and the second data to obtain as output from each algorithm a subset of possible matches from among the plurality of packages, the possible matches including packages identified by the plurality of identification algorithms as having one or more characteristics similar to the first package; and identifying, based on providing an image of the first packages from the first data and images of the subset of possible matches determined after applying the plurality of identification algorithms as input to a machine learning model, the particular package that matches the first package; and using information from a label of the particular package to route the first package through the shipping network.

Other implementations of this aspect include corresponding systems, apparatus, and computer programs, configured to perform the actions of the methods, encoded on computer storage devices.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

These and other implementations can each provide one or more advantages. Implementations reduce the computing resources employed to identify a package with a damaged label by efficiently processing collected data for packages at a transportation network. Using the techniques of the implementations of the present disclosure, data collection for packages within a transportation or a shipping network can be enhanced by implementing different sensors and computers to obtain timely and relevant data for use in identification of a package with a damaged label that is to be routed through the network. According to implementations of the present disclosure, identification of a particular package is performed faster since a combination of one or more identification algorithms can be implemented. The different identification algorithms can be ordered to be performed sequentially based on a dynamic evaluation of the computational expense of applying these algorithms over the particular data that is obtained for packages at the network. Thus, the implemented identification provides useful information from a label of a particular package to route the package through the shipment network in a faster, cheaper, and rather flexible manner.

The details of one or more implementations of the present disclosure are set forth in the accompanying drawings and the description below. Other features and advantages of the present disclosure will be apparent from the description and drawings, and from the claims.

### DESCRIPTION OF DRAWINGS

FIG. 1 depicts an example transportation network that can be used to route packages according to implementations of the present disclosure.
FIG. 2A is a flow chart showing an example process for routing a package in accordance with implementations of the present disclosure.
FIG. 2B is a flow chart showing an example process for matching a package with a damaged label to an image of the package prior to the label damage in accordance with implementations of the present disclosure.
FIG. 3 is depicts a conveyor belt for transporting products at a shipment hub part of a shipping network where data for packages can be collected in accordance with implementations of the present disclosure.
FIG. 4 is a block diagram of an example scheme for ordering packages in a transportation vehicle in accordance with implementations of the present disclosure.
FIG. 5 is a block diagram of an example system for identifying and routing packages with a damaged label in accordance with the present disclosure.
FIG. 6 is a flow chart showing an example process for identifying a package based on applying one or more identification algorithms in a sequential manner in accordance with implementations of the present disclosure.
FIG. 7 is a schematic illustration of example computer systems that can be used to execute implementations of the present disclosure.

Like reference symbols in the various drawings indicate like elements.

### DETAILED DESCRIPTION

Implementations of the present disclosure are directed to data processing associated with identifying a package that has a damaged shipping label from among multiple other packages within a shipping network that have not yet been routed to a final shipping destination. Specifically, processes disclosed herein match the package with the damaged shipping label to an image of the package prior to the damage occurring. The matched image can then be used to extract shipping data from an undamaged label in the image.

In some implementations, a transportation network can be organized to facilitate transportation of packages between transportation hubs (e.g., locations or sorting facilities) as intermediary or final destinations for packages sent by customers. In some implementations, when a package is provided for routing through the transportation network, the package is labeled and a route is defined according to transportation conditions defined by the sender or otherwise generated for the package (e.g., through a software application generating routing requirements, price criteria, availability of transportation mode, etc.). In some implementations, the transportation network is a shipping network of a logistics operator that sends and delivers packages (e.g., parcels, letters, boxes, etc.) through shipping hubs defined within the shipping network.

In some implementations, a package that is to be shipped can be received at one packaging station of a transportation network and directed to a destination address (e.g., shipping hub, or other location that can be reached with a transfer from a shipping hub of the network). The package can be labeled with data relevant for the package and indexed with shipment data for the routing. In some implementations, a shipping label can include information that a carrier needs to provide to transport a package from its origin location to its destination. The shipping label can include a scannable barcode with a tracking number that enables the carrier to provide delivery updates. In some implementations, the shipping labels can be different from mailing labels, which only include the recipient's name and address. Usually, a shipment requires a unique shipping label, and the shipping label can be tracked during the route of the package at different locations of the carrier. In some implementations, when a package is routed through a transportation network of the carrier, data for the progress of the transportation can be collected. For example, images of the package can be collected, package can be weighted, can be recorded in a database, context information for the particular shipment can be collected (e.g., order of organizing the packages in a particular vehicle or vessel, identification on the vehicle or vessel that is scheduled for carrying the package.

In some implementations, the package can be sent through one or more transportation hubs of the network and by means of multiple transportations modes and in accordance with predefined scheduled timetable for transportation vessels (e.g., cars, buses, trucks, trains, aircraft, ships, etc.). For example, two transportation hubs can be connected through one or more transportation modes (e.g., only trucks, or trucks and aircraft). The transportation can be performed according to a predefined schedule for transportation between a first and second hub (e.g., flight once per day, or trucks departing from a location at 0800 and at 1600 every day).

In some implementations, when a package is received for transportation at a shipping facility or location, it can be labeled and the label can be used for routing the packages during the shipping process. For example, the label can include information for a recipient and a sender, for the type of delivery (e.g., urgent, fragile, with priority, etc.), as well as information for the route for the transportation. The route can define the transportation hubs the package is routed through before the package arrives at the final destination. In some examples, the route may also indicate the type of transport (e.g., transport mode) between the locations. In some implementations, the label can include specific data for the package (e.g., type of goods transported, shipping priority level, etc.). When the package is routed, the label is reviewed at each transportation hub to record the progress of the package through the shipping network. In such way, tracking of the progress of the package can be recorded and provided to a sender or receiver upon request. In some cases, the label may be damaged (e.g., partially or completely scratched, broken, blurry to read, ripped, removed, etc.) and such damage may affect identification of the package and the determination of how to proceed with transporting the package through the shipping network. In some implementations, the package can be identified by using one or more identification mechanisms to identify the package from other packages already recorded as transported through the transportation network in accordance with implementations of the present disclosure.

In some implementations, data for packages that are recorded at transportation hubs in the shipping network that have not yet reached their final destination can be collected and used to identify a package that has a damaged label. A package that has a damaged label is expected to have been scanned at a previous location on its routing journey (at least when initially received for shipping), where the package had a complete shipping label. In some implementations, data for packages that are within a threshold distance from a location where the package with the damaged label is located (e.g., initially identified as having a damaged label) can be collected and used for applying one or more identification algorithms to identify an image of a package that corresponds to the package that has the damaged label before the label was damaged. For instance, the identification algorithms attempt to match the package with the damaged label to images of other packages based on package characteristics other than the label to identify an image of the package taken before the label was damaged. In some implementations, the identification can be based on different identification criteria including size, weight, location, visual appearance (e.g., colors, marks, patterns, etc.), probability of arriving at a particular location, contextual information for the delivery, others.

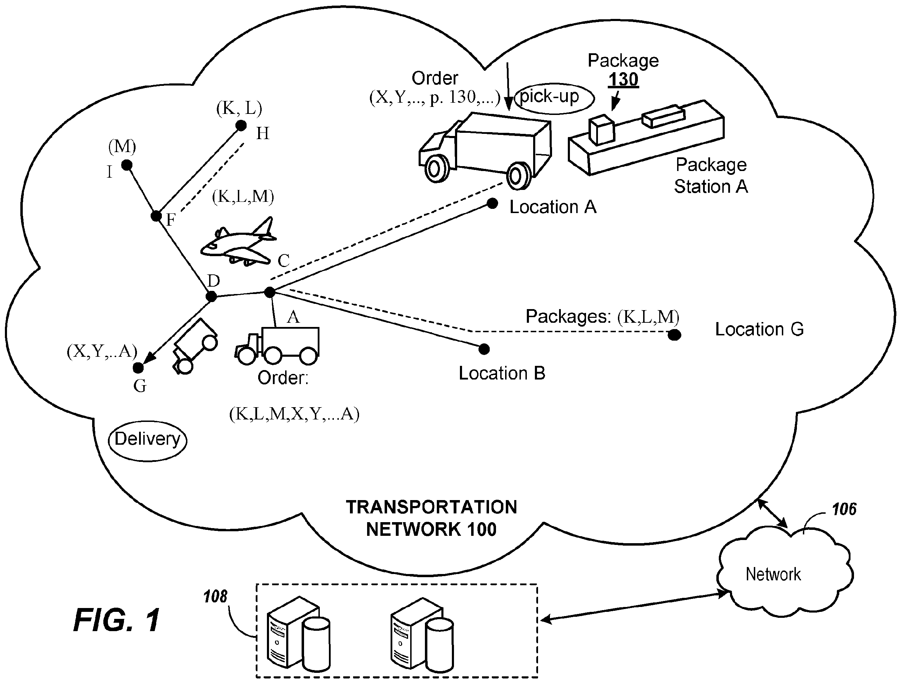

FIG. 1 depicts an example transportation network 100 that can be used to route packages according to implementations of the present disclosure. The transportation network 100 is a logistics network that includes multiple locations, hubs or facilities, and vehicles or other transportation units for transporting packages in-between. The transportation network 100 can include or be associated with a data network 106 that includes one or more data collecting components at different locations of the logistics network. The data at a data network 106 included or associated with the transportation network can be collected based on configured sensors and computers that track packages. The collection of the data can be automatically performed or based on user or external application interaction that inputs data related to packages transported within the transportation network.

The computer system 108 includes one or more server devices and databases (e.g., processors, memory). In some implementations, the computer system 108 can store data and logic for processing data related to the transportation network 100. The computer system 108 can process requests for dispatching packages through transportation hubs of the transportation network 100 and can monitor the progress of transportation of packages. In some cases, the computer system 108 can obtain data from each or some of the transportation hubs of in the transportation network 100 and one or more of the vehicles that provide the transportation services. In some implementations, the obtained data can include, but is not limited to, text data, label data, image data, video captured data, other types of sensor data, or a combination thereof In some implementations, a user can interact with the computer system 108 through a device to send and receive information related to one or more packages routed through the transportation network 100, or related to services provided by the transportation network 100 (e.g., status checks, delivery estimations, etc.).

In some implementations, the device can communicate with the computer system 108 over the network 106. In some examples, the device can be any appropriate type of computing device, including but not limited to, a desktop computer, a laptop computer, a handheld computer, a tablet computer, a personal digital assistant (PDA), a cellular telephone, a network appliance, a smart device, a network connected scanner, or an appropriate combination of any two or more of these devices or other data processing devices. In some implementations, the network 106 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In some implementations, the computer system 108 includes at least one server and at least one data store. In the example of FIG. 1, the computer system 108 is intended to represent various forms of servers including, but not limited to a web server, an application server, a proxy server, a network server, and/or a server pool. In general, computer systems accept requests for application services and provides such services to any number of devices (e.g., a device over the network 106). In some implementations, the computer system 108 is a cloud platform deploying a cloud application for managing and storing data related to the transportation network 100.

In some implementations, the transportation network 100 includes multiple transportation hubs (or locations or nodes) that can be defined in a graph structure to support transportation from an origin destination to a final destination. The hubs of the transportation network include locations A, B, C, D, G, F, H, and I. In some implementations, further hubs can be defined in the network. The hubs in the network 100 can be connected by edges representing transportation routes between hubs as illustrated in FIG. 1. In some implementations, two hub locations can be connected with one or multiple types of transportation (e.g., truck and/or air flight) where each transportation mode can be associated with a schedule for executing the transportations.

In some implementations, location A 105 can be a receiving hub where a package 130 is received to be sent by a sender to a destination location. For example, the destination location can be a hub of the transportation network 105 such as the location H 135. In another example, based on the destination location defined for the package 130, it can be determine that the package can be routed through locations C, D, F, and H to reach the final destination location that is not part of the defined hubs in the transportation network 100 (e.g., a private address)

In some implementations, when package A 130 is received for transportation to its target destination, e.g., location H 135, a route for dispatching the package 130 can be defined. For example, the route can be defined based on the initial sending requirements provided for the package from the sender. The package 130 can be transferred through a route including the transportation hubs A, C, D, F, and H. The transportation connection mode between location A and location C 110 can be a truck, where package 130 is placed on the truck according to an order of placement together with other packages that are transported from location A to location C. In some implementations, the order of placement of a package (e.g., received from a conveyor belt) on the truck at location A can be recorded. For example, the determination of the order of locations included in the route can be performed manually or automatically through an implemented logistics software service. In some implementations, the determination of the route can be based on the shipping request for the package A and the priority defined for the shipment. In some implementations, if there are two options for transportation modes between two nodes (e.g., between C and D) such as a truck and a flight option, package A can be routed with the truck if the shipment request is for a regular no priority shipment. In those instances, when package A is transported from C to D, data for the package can be collected at the two locations. The collected data can be data from the label of the package 130 (e.g., prior to any damage to the label), as well as image data collected at the location (e.g., on a conveyor belt), or context data related to the order of the package to be put inside the truck at location C, and brought outside the truck at location D.

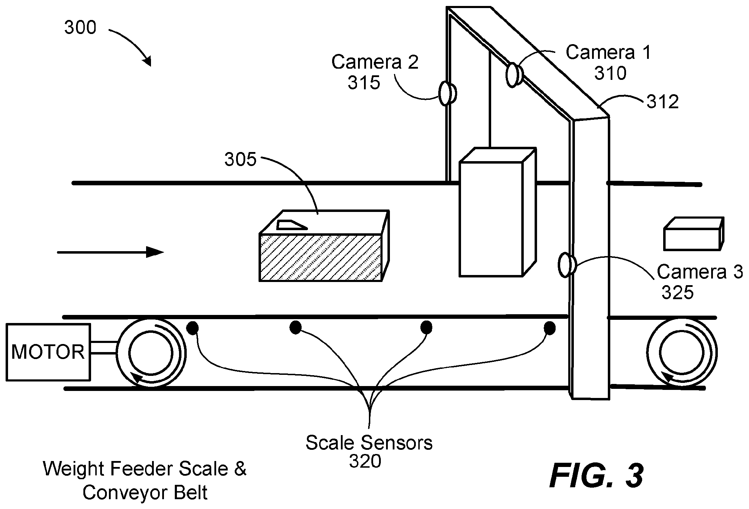

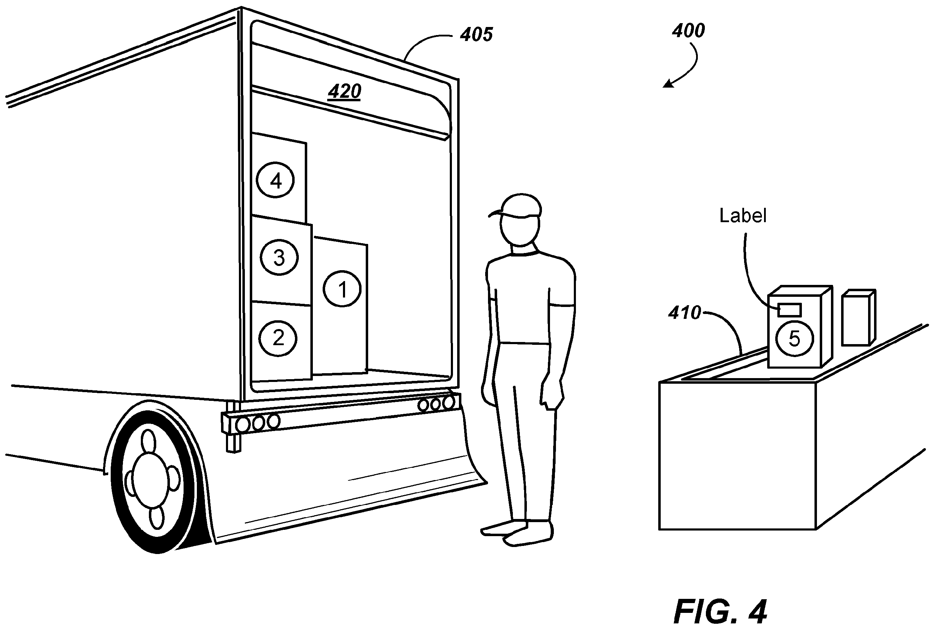

In some implementations, in cases where for example the package 130 is sent to destination H, the package 130 is checked at each location during the defined route at the transportation network 100 and data is collected at each location. The collection of the data can be performed as described in relation to FIG. 3 where data for packages is collected based on sensor data collected from cameras located in close proximity to a conveyor belt, or other sensors such as scale sensors located at the conveyor belt. In some other instances, the collection of data for packages can be performed when packages are loaded on a truck or other vehicle. For example, data for ordering the packages at a truck can be collected as described in relation to FIG. 4.

In some implementations, when package 130 is routed from its origin location A to the destination location H, the label of the package may be obstructed or damaged. For example, the label may be partially or completely scratched, may be covered with some substance that may make it unreadable, may be removed, or may be covered with another labeling that makes the label unidentifiable. For example, if package 130 is determined to have a damaged label at location D, the determination of how to proceed with routing the package from location D to its target destination can be performed based on already collected data for packages that were transported through the transportation network 100 but have not yet reached their final destination as expected.

In some implementations, if a package is identified to have a damaged label at a first location, data for other packages that was collected at other locations of the transportation network 100 can be collected. The other locations can be locations that are reachable within a time period that can be reasonably expected to have reached the first location or to be able to reach the first location based on scheduled transportation routes to the first location since the package with the damaged label was discovered. In some implementations, the packages that have been already tracked at other locations can be used as a candidate set of packages that include an image of a package that matches the currently processed package with the damaged label. It can be appreciated that before a package with a damaged label is discovered at the first location, it had been scanned and processed at a previous location. Thus, collected data for previously processed packages can serve as a basis for performing one or more identification algorithms to determine which of the previously processed packages matches the package with the damaged label. The package with the damaged label can then be routed to its destination based on routing and/or address information associated with the matching package.

In some implementations, different locations within the transportation network 100 can be equipped with sensors and processing tools and techniques to track information for each package that is processed at a location. In some implementations, the tracking information can be recoded in a database, for example, a database part of the computer system 108. The tracking information can be organized for the different location, for different types of packages, and can include time stamp data, weight data, priority data, status data, routing data, final destination data, and sender and receiver data, among other example data. In some implementations, data for each package transported through the transportation network 100 can be collected as a single unit with identification of the progress of the transportation.

In some implementations, the collected data for packages that are routed through the transportation network 100 can be used for providing notification services to end user or service, or to support identification of packages that cannot be identified (e.g., due to a damaged label).

In some implementations, if package A 130 is identified at location D 115 as a package with a damaged label, data for packages that have been tracked at the transportation network can be collected. Such data can be collected for packages that meet one or more criterion that can be predefined or dynamically interpreted. For example, data for packages that are tracked in the computer system 108 associated with the transportation network 100 at a time point that is within a preset amount of time (e.g., within the previous 2 to 4 hours, within the previous 10 to 20 hours, etc.), or within a present geographic distance from the location D, or based on other predefined criteria that can be used to dynamically determine which packages can be used for the initial evaluation. In some implementations, the predefined criteria that can be dynamically evaluated to determine which packages are relevant for the evaluation and identification of the package A with a damaged label at location D can be defined as a requirement that can be used to compare with locations that are within close proximity to the location D. The criteria can be defined as based on a type of a vehicle that the package A could have been delivered with and an expected period of time for a package to be delivered from a location connected to location D that provides a transportation mode corresponding to that type of a vehicle.

In some implementations, the criteria can be defined to filter locations that are connected with the location D 115 of the package with the same type of transportation. For example, if package A 130 has been delivered by an airplane, the locations that are connected with a transportation mode "airplane" can be determined, e.g. locations F and C, and based on the distance between D and C, and D and F, a time period when a package at that location could have potentially be scanned and transferred can be determined. In this example, if the travel time between the two location is approx. 2 hours, and the flights are scheduled every 12 hours, packages that have been scanned between 14 to 16 hours prior the time of the identification of the package 130 as having a damaged label can be identified and used as an initial set of packages to be evaluated to determine whether a matching package in that subset can be identified to package 130.

In some implementations, the initial set of potentially matching packages may be defined too restrictively. Such a definition may result in difficulties of identifying the proper matching package. For example, defining a higher precision for limiting the set of packages that can match a package with a damaged label can result in inability to determine a match. In such cases, the provision of the filtering can be modified to include more packages for evaluation which could be possible matches to the first package. Therefore, in cases where based on an initial set of packages, a matching package cannot be determined with an expected level of certainty, then a new definition of an initial set of packages can be determined.

In some implementations, the example of defining the initial set of packages based on a time period prior to identification of the package A 130 can be interpreted as an example and can be combined with other criteria that can be used to determine the initial set. Further, a new initial set can be determined, where such new set can be determined based on the same or a different criteria used for the identification of the packages. In case where the same criterion is used, the criteria can be customized to a different granularity to allow for more packages to fall into the initial set, and the already evaluated packages can be either re-evaluated with the new initial set, or excluded from the evaluation.

In some implementations, the package A 130 might have not been tracked for the type of transport that was used for the delivery, and then locations within a threshold distance (e.g., time, or geographic distance) can be determined to collected data for tracked packages at those locations. In some other instances, the initial set can include all packages that were tracked in the transportation system. In some more, the initial set can be defined based on other criteria, such as visual appearance of the package (e.g., package that are red). In some implementations, the initial set can be defined based on other example criteria or combination of criterion, and the initial set can be iteratively defined based on different criteria until a matching package is determined.

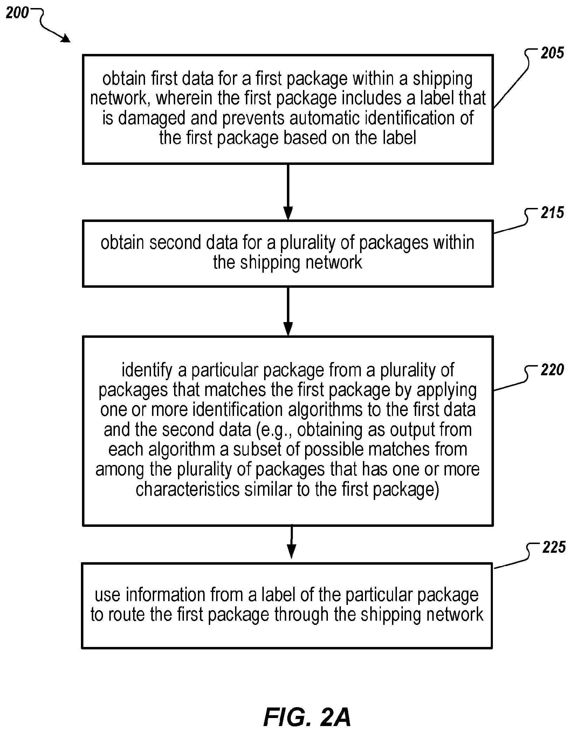

FIG. 2A is a flow chart showing an example process 200 for routing a package with a damaged shipping label. Process 200 can be executed by one or more computing systems, such as the computer system 108 of FIG. 1.

In some implementations, a package may be transported through a transportation network that can be a shipping network for handling delivery of package between an origin and destination location. While transporting the package, the package can be moved through one or more locations, where data about the package can be collected. In some implementations, such data can include, but is not limited to, time stamp data, physical characteristics of the package (e.g., weight, color), image data, and video data.

At 205, first data is obtained for the first package within the shipping network. The first package includes a label that is damaged and prevents automatic identification of the first package based on the label. The first data can include, but is not limited to, images of the package with the damaged label, a weight of the first package, a size of the first package, a shape of the first package, dimensions of the first package, a previous locations of the first package within the shipping network (e.g., package drop off or sorting facilities-if known), the present location of the first package within this shipping network, and a location of the first package within an unloading order of packages from a delivery vehicle. The first data can be obtained, e.g., from one or more sensors, computers, or databases within the shipping network.

At 210, second data is obtained for a plurality of packages within the shipping network. The plurality of packages are selected as potential matches for the package with the damaged label (i.e., the first package). And, the second data includes characteristics of each of the plurality of packages that can aid in identifying a match with the first package. The second data includes data associated with the second packages that was obtained prior to the discovery of the damage to the first package, e.g., data obtained at transportation network locations (e.g., e.g., package drop off or sorting facilities) through which the packages passed earlier in their respective shipping route. For example, the second data can include, but is not limited to, images of the packages, weights of the packages, sizes of the packages, shapes of the packages, dimensions of the packages, previous locations of the packages within the shipping network (e.g., package drop off or sorting facilities), the present location of the packages within this shipping network, and locations of the packages within an unloading order of packages from a delivery vehicle. The second data can be obtained, e.g., from one or more sensors, computers, or databases within the shipping network.

In some implementations, the plurality of packages that are associated with the obtained second data can be determined as packages that were transported through the shipping network that have not yet arrived at their expected destination. For example, the plurality of packages include packages that were scanned as departing from a facility (e.g., a hub or a location) and are not scanned as arriving with packages at a destination or intermediate location of the routing journey.

In some implementations, the plurality of packages can be packages that are recorded or scanned at the shipping network at a departing location but not recorded or scanned as arriving as expected. For example, a set of packages can be recorded as departing from location C 110 and are expected within 4 hours to arrive at location D 115. For example, the travel time between C and D is on average taken for 3.3 hours and a buffer time period can be added to determine 4 hours as expected travel time. In some other examples, expected travel time can be determined based on applying prediction algorithms that can be trained based on historic data collected for executed transportation of packages at the shipping network. In those examples and with reference to the example transportation network 100 of FIG. 1, if a package is scanned at location C as departing to location D, but has not arrived at location D within the expected travel time, the package can be included in the plurality of packages, as a potential match to the first package, that was determined to have a damaged label at location D 115.

In some implementations, the obtained second data is for a plurality of packages that are defined as an initial set of packages to be used for applying identification algorithms. For example, the initial set of packages can be defined as discussed above in relation to FIG. 1. In some implementations, the initial set can be determined based on identification criteria associated with requirements such as time period of scanning a package prior to the identification of the first package and obtaining of the first data, distance between the location of the first package and other locations (hubs or facilities) of the shipping network where one or more of the packages are recorded (or scanned).

In some implementations, the plurality of packages can be defined as packages that meet criteria for reasonably expected packages to match the first package based on the possibility to have arrived at the location of the first package where the first package was discovered to have a damaged shipping label. For example, if a package X is scanned at location I a minute prior to discovering that the first package has a damaged label at location A (that is distant from location X), and there is no reasonable expectation that package X could have been transported from location I to location A, package X would not be a possible match for the first package and would not be included in the plurality of packages associated with the obtained second data at 220.

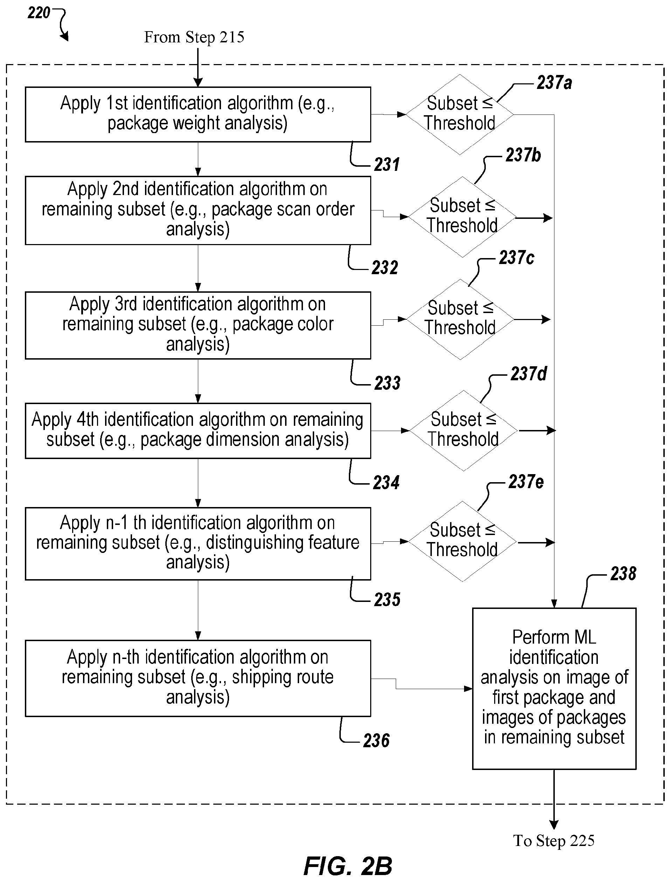

At 220, a particular package from the plurality of packages is identified. The particular package is identified as matching the first package by applying one or more identification algorithms (described in more detail below with reference to FIG. 2B) to the first data and the second data. In some implementations, applying the one or more identification algorithms includes obtaining as output from each algorithm a subset of possible matches from among the plurality of packages. In some implementations, the possible matches includes packages identified by the one or more identification algorithms as having one or more characteristics similar to the first package.

In some implementations, a set of algorithms can be applied one algorithm after another in sequential manner. The identification algorithms reduce the number of packages that fall within the criteria of possible matches to the first package, and therefore, the set of possible matches is sequentially reduced by each algorithm, to determine one or more matches that are associated with a high probability of being the first package prior to the shipping label being damaged.

In some implementations, identifying the particular package includes evaluating the first data and the second data by applying one algorithm of the one or more identification algorithms. In some implementations, a determination of which one of the algorithms to be applied can be performed dynamically based on the characteristics of the first data and the second data. In some implementations, the second data includes image data that is of a lower resolution, and using image processing techniques to compare the first data and the second data can be performed with fewer computation resources. In those instances, choosing an algorithm that is based on image comparison can be selected as the first algorithm to be applied to identify the particular package. For example, image comparison can be performed to compare sizes of packages, color of packages, particular visual features of the packages, and machine learning recognition techniques to determining a match for the first package from the plurality of other packages.

In some implementations, applying the first algorithm (e.g., package weight comparison, scan order analysis, package color comparison, package size comparison, feature analysis, route analysis) can include matching a first portion of the first data with a first portion of the second data, where both first portions are associated with a first characteristic from a set of characteristics of the first package. For example, the first portions are associated with the colors of the packages.

In some implementations, in response to performing the matching based on a first characteristic of the first package, a first subset of the plurality of packages can be determined. The first subset can substantially match the first package according to the first characteristic.

In some implementations, in response to determining that the first subset of the plurality of packages includes a set of packages within a predetermined threshold number (e.g., defined as a number of packages or as a percentage from the number of packages in the initial set), the first subset can be provided as input to a second subsequent algorithm. In some implementations, the second subsequent algorithm can be a machine learning model to identify the particular package that matches the first package from the subset. In some implementations, the machine learning model is trained to identify the particular package based on image recognition. The machine learning model can provide a score for similarity between two or more images when performing package identification based on image recognition. In some cases, a high similarity score can be determined when comparing two images that represent the same package, but on one of the images the package is missing a label and on the other image, the package is not missing the label. In some instances, the machine learning logic can be implemented to compute scores for a predefined number of paired comparisons of the image of a first package without the label and a respective image of a set of the images of the other packages (e.g., a percentage of all or all images of the other packages).

In some implementations, the comparisons can be performed in stages and/or in batches working on portions of the image (e.g., images of the package from different perspectives). If a similarity score is determined to be above a predefined threshold, the image of the package corresponding to that similarity score can be output and provided for verification and/or routing the first package that misses the label. In such implementations, the remaining images of the other packages may be omitted from processing the machine learning model since a candidate that matches the first package without the label is output. For example, if the candidate package is determined later on that does not to match the first package (e.g., based on user verification), then a subsequent application of the machine learning model can be performed based on images of those remaining of packages that have not yet been evaluated. In some implementations, comparisons are performed between the image of the package with the missing label and images of each of the other packages. In such implementations, a match can be determined based on the paired comparison with the highest score.

In some implementations, algorithms from the one or more identification algorithms can be subsequently selected and applied over the second data and the plurality of packages in a particular order. In some implementations, the order can be provided as a preset order or as an order that is dynamically determined based on the type of data, the amount of data, the number of packages, and the imposed rules and precision for the identification, among other examples.

In some implementations, the one or more identification algorithms can be determined to be associated with corresponding one or more weighting scores that represent an expected gain from running a respective algorithm. In some instances, the weighting scores can be determined based on historic data collected over time for applying the algorithms to identify packages, for example, in a particular shipping or transportation network.

In some implementations, the weighting scores can be determined on demand when determining which algorithm to apply, and the weighting scores can be used to prioritized the order of algorithms for their application. For example, higher weighting scores indicate that the associated algorithm has a greater potential to significantly (or substantially) reduce the evaluated (or candidate) set of packages to potentially matches with the first package without a label. In some cases, even if the computational complexity of one particular algorithms is low, a different, more computationally complex, algorithm may be applied first, because that more computationally complex algorithm may reduce the evaluated set of packages by a greater amount, thus potentially reducing the total number of identification algorithms that must be applied to reduce the evaluated set of packages below a threshold size. In some implementations, such a preference for the more computationally complex algorithm can be based on an evaluation of historic results and performance measurements of all of the algorithms and their performance to reduce the size of an evaluated set of packages. Thus, the algorithms from the one or more algorithms can be evaluated to determine weight scores for each algorithm that correspond to their efficiency to reduce the size of an evaluated set of packages to determine a matching package to a first package that is without a label.

For example, if a package weight analysis algorithm may generally reduce the set of candidates of packages by 50%, and a package dimension analysis may reduce the candidate set of packaged by 90%, then the package dimension analysis may be associated with a higher weighting score compared to the weighting score of the package weight analysis algorithm, even if the package dimension analysis would require more computational resources than the package weight analysis. In some implementations, the weighting score can be based on a combination of the computational complexity of an associated identification algorithm and the amount by which the algorithm is likely to reduce the size of the evaluated set of packages.

In some implementations, applying the one or more identification algorithms includes applying a plurality of identification algorithms in a sequence. For example, the sequence can be similar to the discussed sequence of algorithm execution as described in relation to FIG. 2B. In some implementations, at each step in the sequence, a respective set of data from the second data for the plurality of packages is evaluated. The respective set can be associated with i) a respective characteristic that is evaluated and ii) previously determined subset of packages from the plurality of packages at a previous step in the sequence that matches the first package according to a previously evaluated characteristic of the first package.

In some implementations, at each step in the sequence, a characteristic of the first package is evaluated. The characteristic can include, but is not limited to, package weight, package colors, package scan order, package dimensions, outer surface markings, and expected package shipping route, among other examples. In some implementations, a respective characteristic can be selected for determining an identification algorithm for evaluation of the first data and second data based on the respective characteristic.

In some implementations, the identification algorithms that can be applied can be with comparatively different computational complexity and resource requirements for their execution. Such characteristics of the algorithms can be based on the type the identification algorithms can be arranged in the sequence according to a different computational complexity based at least on a number of packages provided as input for the identification algorithm from a previous iteration. In some implementations, the one or more identification algorithms can be evaluated and a computation cost can be assigned to each algorithm at each determination of application of one of the algorithms, where the algorithm that has relatively the lowest computational cost can be applied to determine a subsequent subset of packages that can be used to identify the first package or as an initial set for a sequent application of another identifying algorithm. In some implementations, the identification algorithms can be applied in an ordered sequence according to increasing computational complexity.

In some implementations, after the identification algorithms have been performed, the particular package can be identified from the plurality of packages is performed based on providing one or more images of the first package and images of each package in a subset of possible matches as input to a machine learning model trained for image recognition. In some of those instances, the subset of possible matches is determined based on the initial set of packages defined as the plurality of packages, or based on filtering the initial set of packages based on another identification algorithm (e.g., color matching, size matching, weight matching, context matching, etc.).

At 225, information from a label of the particular package that is identified at 220 is used to route the first package through the shipping network to its final destination. In some implementations, the label information can be obtained from an image of the particular package that includes the label. In some implementations, the label information can be obtained from a database record associated with the particular package, e.g., a database record indicating the destination address.

FIG. 2B is a flow chart showing example steps performed as part of step 220 from FIG. 2A. The sub-processes presented on FIG. 2B are performed based on obtained first and second data as described in FIG. 2A, and provide an example process flow for execution of step 220 in FIG. 2A.

The obtained second data is for the plurality of packages that are scanned at a departing location and are not identified as being delivered at their expected destination. In some implementations, the plurality of packages are a subset of all the scanned packages that had not been yet identified as arrived, that also comply with filtering criteria to reduce the subset of packages that are within a distance (e.g., geographic distance or transportation time when considering schedule of transport) that is associated with higher likelihood of being associated with a previous location where the first package was previously scanned. For example, a package that was scanned two hours ago at a location that is four hours away from at the location of the first package is associated with lower likelihood to matching the first package. For instance, if such package was scanned two hours ago at a location having a direct transportation route to the location of the first package but the travel time between the two locations is four hours the package would not be a likely match for the first package and its data would be excluded from the second data. In some implementations, this process can also account for a shipping schedule between locations in the shipping network. For example, if a package was scanned two hours ago at a location having a direct transportation route to the location of the first package, the package would may be a likely match for the first package if the travel time between locations was less than two hours. But, if the shipping schedule between the locations does not have any vehicle routes scheduled between the two locations during that time, the package would not be a likely match. In other words, only packages that have a reasonable likelihood of being located at the location of the first package concurrently with the discovery of the damaged label on the first package based on travel time and/or shipping schedules are included in the plurality of packages for which the second data is obtained.

In some implementations, an initial filter criteria can be defined for determining the plurality of package for which the second data is obtained. Such a filter can define a threshold travel time between the first package and a scanning location of another package (e.g., scanned at packing stations that have a direct connection to the location of the package, scanned at a network location within a 200 mile radius, scanned at a packing station that can be reached within 12 hours with existing transportation mode connections and based on executed schedule, etc.).

At 231, a first identification algorithm is applied. For example, the first identification algorithm can be a package weight analysis that includes comparing a weight of the first package included in the first data with weights of other packages included in the second data. In some implementations, any packages from the plurality of packages that has a respective weight that does not match the weight of the first package within a weigh threshold range (e.g., a weigh range value or a percentage range around the weight) are excluded from the plurality of packages with the weight analysis.

At 237a, the subset of packages that are determined as matching to the first package from the application of the first algorithm at 231 is compared with a threshold value number of packages to determine which identification algorithm to apply to identify the particular package from the plurality that matches the first package. For example, if weight analysis is performed and the number of packages in the subset is two, where a threshold value is defined as 2, or 3, or more, the subset of two packages and the corresponding data from the second data can be provided to 282 to perform a machine learning identification analysis on an image of the first package and images of the two packages remaining in the subset. It can be appreciated that these threshold values are examples and other thresholds can be configured for the execution of the identification. Further and for example, the threshold values can be provided as a user input and can be obtained at each step rather than being predefined for the method 220 as a whole.

In some implementations, if the subset defined after the first identification algorithm is executed does not meet the criteria 237a, the subset can be provided for execution of a second identification algorithm at 232.

At 232, a resultant subset of packages that comply with the identification criteria used for the first identification algorithm at 231 is provided for a use for a second identification algorithm. For example, such identification algorithm can be a package scan order analysis. The application of a package scan order analysis can include comparing an order of loading the first package into a shipping vehicle or shipping container with unloading orders of other packages of the plurality of packages from the shipping vehicle or shipping container. In such example, based on the analysis, any packages within the plurality of packages that has a respective unloading order that is not within a threshold range of an expected unloading order for the first package are excluded. The expected unload order can be based on the order of loading the first package into a shipping vehicle or shipping container. For example, when packages are loaded on a truck or other transportation mode, they can be loaded in a particular order that can be tracked and stored for the packages. In cases where the packages are unloaded in a different order than the reverse of the load order, it may be questionable to identify a package based on solely the order. However, a certain variation within the load and unload order can be expected and acceptable to determine with higher probability that the package that is loaded at a given position is of high likelihood to have been unloaded at a position that within a range of positions around the position it loaded at (or in reverse order). In some implementations, the tracking of the load and unload positions can be performed as described in relation to FIGS. 3 and 4.

In some implementations, the resultant set of packages after applying the package scan order analysis can be evaluated based on criteria 237b. The criteria 237b is substantially similar criteria 237a and evaluates whether the number of packages in the determined subset is below or equal to a threshold. If the subset is below of equal a threshold (e.g., 5 packages, 1 % of the packages from the initial set of packages used at the first algorithm, else), the resultant subset from the second algorithm can be provided to 238 for machine learning identification analysis as previously discussed.

In some implementations, if the subset defined after the first identification algorithm is executed does not meet the criteria 237a, the subset can be provided for execution of a second identification algorithm at 232.

At 233, a resultant subset of packages after applying the second identification algorithm 232 can be provided for applying a third identification algorithm. For example, the third identification algorithm can be a package color analysis. In some implementations, the package color analysis can include comparing a first set of colors present within an image of the first package with sets of colors present within images of the packages of the subset that was provided as a resultant set from 232. Based on the package color analysis, any packages within the plurality of packages that has a respective set of colors outside a threshold similarity value to the first set of colors present within the image of the first package is excluded.

In some implementations, when images of the first package and images of other packages from the relevant subset used for this identification algorithm are compared, the color comparison can be based on based on captured colors at a granular level by segmenting a package from the background in a relevant image and creating a histogram of the colors presented in that area of the image. In some implementations, the histogram can be normalized in order to correct for differing package sizes and different distances from the camera that had obtained the image of the package to the location of the package when the picture was taken. These distributions of pixel values can be compared in a number of ways, including based on a Bhattacharyya distance, so that images of packages with the smallest (or a sufficiently small) Bhattacharyya distance can be determined to be likely the same package.

In some implementations, comparing the first set of colors present within an image of the first package with sets of colors present within images of other packages of the subset provided for the execution of the third algorithm (for example, the resultant set of the second algorithm) can include determining Bhattacharyya distances between pixel values of the image of the first package with respective pixel values of the images of the other packages from the subset. In some implementations, the exclusion can be performed to exclude from the subset of possible matches any packages within the subset of packages used for the algorithm that has a respective Bhattacharyya distance to the first package that is greater than a threshold Bhattacharyya distance.

In some implementations, comparing the first set of colors present within an image of the first package with sets of colors present within images of other packages of the relevant subset of packages includes identifying regions within the images of the other packages containing package labels and ignoring pixels in the regions when performing the comparison.

In some implementations, comparing the first set of colors present within an image of the first package with sets of colors present within images of other packages of the relevant subset of packages include identifying label regions within the images of the other packages which include package labels. In some implementations, comparing a respective label region within each of the images of the other package to a region within the image of the first package including a location on the first package that is positioned similar to a location of the respective label region and, thereby, determine whether the region within the image of the first package includes any indicia of damage. For example, the package color analysis can include employing coloration differences within images to identify the relative location of shipping labels on packages within the relevant subset of packages. The same relative location is then inspected, using image processing techniques, in images of the first package (i.e., the package with the damaged label) to determine if that relative location includes damage (e.g., discoloration, fragments of the missing/damaged label, etc.) indicating that a label was located in a similar location on the first package. If the first package has indicia that a damaged label was located in the same relative region as the shipping label in an image of another package, there is a likelihood that the other package is a match for the package with the damaged label. In other words, the package color analysis algorithm can identify the location of shipping labels on images of the packages in the relevant subset and use those locations to perform targeted image analysis of images of the package with the missing label to determine if the damaged shipping label was or is present in the same region. For instance, a likely match for the first package may be indicated if a label is identified in the far upper right corner on an 8 x 12 inch side of a brown box with a seam running horizontally through the middle of the side, and the image of the first package (with the damaged label) shows white blotches with jagged edges (e.g., indicating a label was torn off) in the upper right corner of an 8 x 12 inch side with a seam running horizontally through the middle of the side.

In some implementations, an image of a package can include a label and an image of another package can be without a label. When performing a color comparison, the images can be segmented and the area including the label within one of the images can be ignored in both images, to compare the package color where it is expected to be similar.

In some implementations, in the case where one image of the package includes a label and one does not include a label or the label is damaged, the area where the label is in one of the images can be compared with that area in the other image. In some implementations, the area around the label in both images (be it present, damaged, or not existing) may include distinguishing features that can be associated with higher probability of the packages to match.

At 237c, it is checked whether the resultant subset after applying the third identification algorithm is below a threshold. If the subset has fewer or equal number of packages to a number of packages corresponding to the threshold, the subset is provided to 238 for performing machine learning identification analysis.

If the subset determined from the third identification algorithm 233 is greater than the threshold defined at 237c, than the subset is provided for a fourth identification algorithm. For example, the fourth identification algorithm can be a package dimension analysis. In some implementations, the package dimension analysis can include comparing a first set of package dimensions determined from an image of the first package with sets of package dimensions determined from images of other packages of the relevant subset of packages used for the fourth identification algorithm (e.g., package dimension analysis). In some implementations, any packages within the subset of packages that has a respective set of package dimensions outside a threshold dimension similarity value to the first set of package dimensions determined from the image of the first package can be excluded to determine a resultant subset. In some implementations, the threshold dimension similarity value can be based on an absolute cutoff value or a percentage cutoff, or according to a rule relying on both.

In some implementations, the package dimension analysis includes determining the first set of package dimensions from the image of the first package by projecting a set of three-dimensional package models onto the image of the first package to identify a best fit between one of the package models and the first package within the image of the first package. Dimensions of the one of the package models can be applied as the first set of package dimensions.

Based on excluding packages in accordance with the implementations of the fourth identification algorithm, the resultant subset is evaluated in comparison with a threshold at 237d. If the subset is smaller or equal to the threshold, the identification can be performed by a machine learning identification algorithm at 238 as previously discussed. If the subset is greater than the threshold, subsequent identification algorithms (e.g., in a defined order) can be performed.

As shown on FIG. 2B, a subsequent identification algorithm can be applied after the fourth algorithm at 235 and the resultant subset from applying such an algorithm can be compared to a threshold at 237e. Further, if the number of packages in the resultant set is above the threshold, further identification for the resultant set can be performed based on a subsequent algorithm at 236. As presented on FIG. 2B, at 235 the identification algorithm that can be applied is a distinguishing feature analysis, and at 236, the algorithm is shipping route analysis.

In some implementations, applying a distinguishing feature analysis that includes identifying a first set of one or more features on the first package from an image of the first package. The features can include one or more of marks, scratches, holes, or text, among another example. The first set of one or more features is compared with images of other packages of the relevant subset of packages for the algorithm (e.g., as provided as a resultant set from the fourth identification algorithm 234). Any packages within the subset of packages used for the analysis that do not have at least one of the one or more of the features detected on the first package are excluded and a resultant subset of packages that match the first package is determined.

In some implementations, the subsequent identification algorithm applied at 236 can be a shipping route analysis. The shipping route analysis can include obtaining a location of a shipping facility within the shipping network where the first package was discovered as having a damaged label. Possible delivery patterns for other packages of the subset of packages used for the identification can be determined. Based on the analysis, any packages within the subset of packages that do not include the location within a respective possible delivery pattern can be excluded. In some implementations, determining locations of the shipping network (e.g., shipping facilities) of the other packages, and filtering the determined location to those of the locations that are with a direct connection with the location of the first package or with a single intermediate location between a respective location of the package and the location of the first package.

For example, if a delivery route for a package should be through locations A->B->C->D->E, where the package was successfully scanned at location C (and it was last scanned successfully at C), and a package is found at location X, where X is location with 4 intermediate transfers to reach from C, then it is less likely the determined package at C is matching the package in comparison to another package that is determined at location Y, where Y is with a single intermediate transfer to reach from C.

In some implementations, a shipping route analysis can be performed based on the structure of the shipping network. In some implementations, the shipping network is a graph network that includes connections between locations (may also be called hubs, or facilities, or nodes) that are associated with direction, type (e.g., transportation mode), cost, and length, among other connection characteristics.

In some implementations, the shipping network is a network graph including a plurality of nodes representing locations to deliver and pick-up packages. The network graph includes a plurality of direction edges representing connections between pairs of locations. The edges can be also associated with a cost value that can represent an expected transit time (e.g., that can be predicted value for the transit time calculated based on evaluating historic data, or can be an average value of a latest predefined number of transit time, or the most recent transit time, among other examples). Based on the network graph, a plurality of routes connecting at least some of the nodes can be defined.

For example, a package's delivery route can be defined to include transportation according to the following chain of nodes that are nodes from the graph shipping network structure: A->B->C->D->E. In that example, a package was last scanned successfully at location C 48 hours ago. If the package is found at X (which is 5 journey legs from C) but the cost along that graph in time is 24 hours, then it is plausible (or possible) that the package is at X. However, even if Y is only one journey leg from C, if it takes 96 hours to go from C to Y, then this package is almost certainly not at Y. By evaluating the likelihood of a package scanned at another location to match the package with the damaged label, a candidate set of packages to be further evaluated can be reduced, and image processing techniques can be executed based on the data for the packages in the candidate set to determine which is the package with the damaged label.

In some implementations, the order as presented in FIG. 2B of the algorithms can be changed. For example, the type of an algorithm that is to be subsequently applied can be dynamically determined as previously discussed, e.g., based on a decreasing order of computational complexity and resource requirements of the algorithms. The algorithms can be applied subsequently to reduce the number of potential candidate packages that would match the first package. In accordance with implementations of the present disclosure, a subset of packages from the originally define initial set of packages can be provided for machine learning identification based on images of the packages and the image of the first package.

FIG. 3 is a conveyor belt 300 for transporting products at a shipment hub part of a shipping network where data for packages is collected in accordance with implementations of the present disclosure.

In some instance the conveyor belt 300 is installed at a location of a transportation network, for example, at a shipping facility. The conveyor belt 300 can be used to distribute packages received at a location to exit points at the location to multiple other location that are connected to the location with various types of transport. In some implementations, when a package is received at a location (e.g., from another location as part of the routing of the package to its destination), the package is scanned. There can be multiple ways of performing the scanning. In some implementations, a conveyor belt can be accommodated with an arch 312 that is positioned above the conveyor belt 300 and is configured with multiple cameras 315, 310, and 325, that are configured to capture images of packages transported through the conveyor belt 300. The cameras can be positioned in such a configuration so that images from different angles can be takes for the images. In some implementations, the packages may include labels. In some cases, based on the images collected for conveyed packages, label data for the packages can be processed and data for the packages can be updated. The collection of the data for the images can also be associated with a time stamp to identify the time of scanning the package.

In some implementations, the conveyor belt 300 can be include at one or more of the locations of the transportation network 100 of FIG. 1, and data collected by the conveyor belt can be recorded for scanned packages at the computer system 108. Such image data can be used for identifying a package that is determined to have a damaged label. For example, data collected at a conveyor belt of a particular location can be used later on if a package is determined to have a damaged label at another location. That other location can be a location that is in closer proximity to the location of the package with the damaged label and could have been a possible location in the expected delivery route of the package with the damaged label.

In some implementations, the conveyor belt 300 can be provided with scale sensors 320 that can be distributed along the moving belt and that can be used for weighing the packages. In some implementations, the packages can be positioned on the conveyor belt 300 to support weighing. For example, packages may be positioned in a line and not on over the other to be able to utilize the scale measurements. In some implementations, packages can be weighed before they are positioned on the conveyor belt 300 on a scale that is external to the belt 300.

In some implementations, collected data from a conveyor belt can be used as part of the second data obtained at operation 210 of FIG. 2A, and also used for the identification algorithms as described throughout the disclosure and for example at FIG. 2B.

FIG. 4 is a block diagram of an example scheme 400 for ordering packages in a transportation vehicle in accordance with implementations of the present disclosure.

In some implementations, at a location of a transportation network, such as a shipping facility, packages can be processed by transferring from a conveyor belt 410 (e.g., substantially similar to the conveyor belt 300 of FIG. 3) to a truck 405 (or other vehicle).

In some implementations, the truck 405 can be provided with a camera 420 that can be positioned to capture the entrance of packages through the backdoor into the truck 405. The camera 420 can take images of the packages that are loaded (or unloaded if the truck is at a destination location). The camera 420 can also collect data for the order of positioning the packages inside the truck 405. However, other sensor or tools can also be used to track the order of loading of packages, as well as for unloading them.

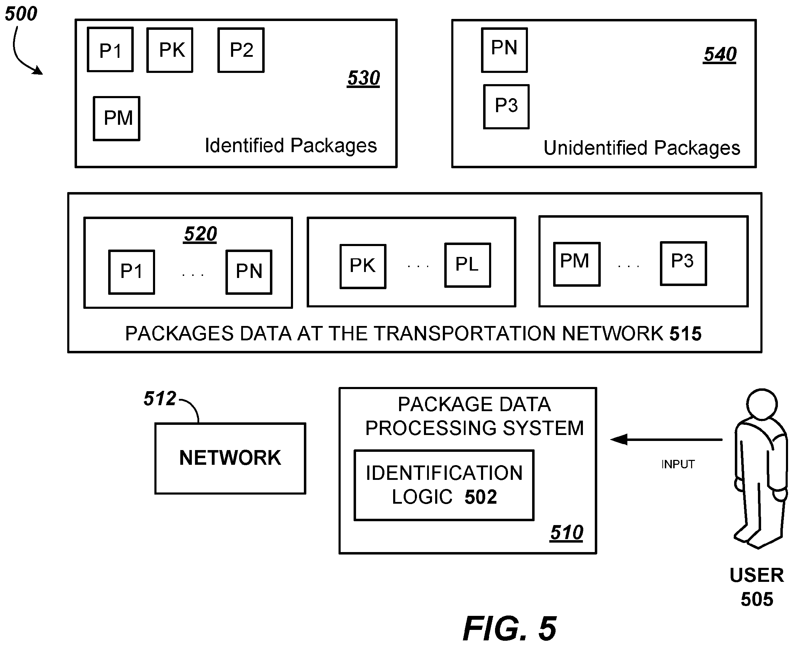

FIG. 5 is a block diagram of an example system 500 for identifying and routing packages with a damaged label in accordance with the present disclosure.

In some implementations, the example system 500 can be substantially similar to the computer system 108 of FIG. 1. The system 500 can be associated with a transportation or shipping network and can be provided with data storage for storing data for packages distributed through the network. In some implementations, the system 500 can be provided with implemented logic to identify and route packages when a package is determined to be with a damaged label.

In some implementations, the system 500 can be configured to execute the methods of identifying a package as discussed through this disclosure, and for example at FIGS. 2A and 2B.

In some implementations, data for identified packages 530 can be stored. The data includes data for packages that are scanned as requested for shipping at a location (or facility) of a shipping network and are also scanned at a destination location as delivered. Further, data for unidentified packages 540 is also stored. Those are packages that are identified at a location within a transportation network but cannot be identified and determined how to be dispatched. For example, these packages include a package that is with a damaged label, as described in relation to FIGS. 1, 2A, and 2B.

In some implementations, package data 515 for different locations within the transportation network is also stored. Such data is for packages that are either identified or unidentified. The data that is collected for such packages can include data such as the sender and the recipient of the package, tracking for the routing of the package or expected routing for the package, cost of the transportation, weight of the package, inclusion of the package in different transportation modes ( e.g., including context information for ordering of the package at a particular transportation mode), and image data of the package (e.g., collected images from a conveyor belt such as conveyor belt 300 of FIG. 3, or from a transportation vehicle such as the truck 405 of FIG. 4, or obtained otherwise), among other example data types for packages.

The system 500 includes a package data processing system 510 that includes implemented logic to identify an unidentified package from the unidentified packages 540 based on applying an identification algorithm(s) part of identification logic 502. The identification logic 502 can include instructions for processing data from the stored data at 515, 530, and 540 to identify a package that matches the identified package, for example, as described in relation to FIGS. 2A and/or 2B.

In some implementations, the package data processing system 510 can receiving input from a user 505. The received input can include input for performing the identification algorithms, such as, identification of the algorithms to be used, order of the algorithms execution, and properties for the algorithms execution, among other user input relevant for identifying a package and routing the package based on the identification.

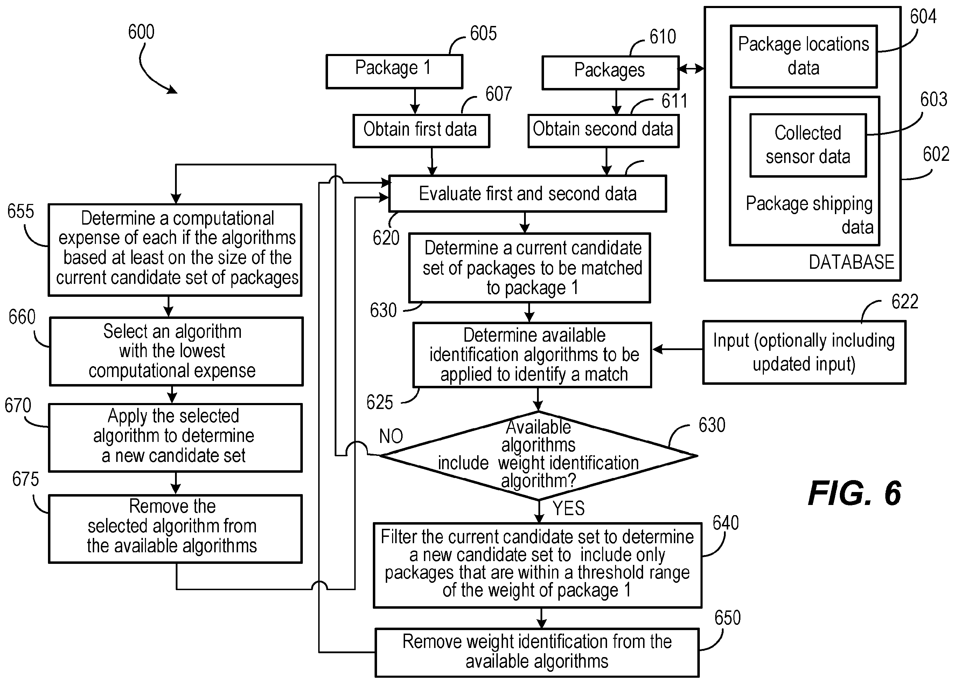

FIG. 6 is a flow chart showing an example method 600 for identifying a package based on applying one or more identification algorithms in a sequential manner in accordance with implementations of the present disclosure. In some implementations, the method 600 can be at least in part similar to the identification method 200 of FIG. 2A.

In some implementations, a database 602 persists data for packages that are routed through a shipping network. The package data can be similar to the package data collected at 515, 530, and 540 of FIG. 5. The database 602 includes package shipping data 603 that includes data for the receiver and sender of a package, and/or routing data for a package. The package shipping data 603 can also include collected sensor data such as image data collected at locations where a package was transferred. Package locations data 604 can also be stored for the package that can include time data identifying when a package was scanned at different locations thought the route of the package to its destination. The data for packages can be organized in multiple database tables, where packages can be identified with identification numbers that uniquely distinguish them.

At 607, first data is obtained for a first package 605. The first package 605 can be a package that has a damaged label and cannot be routed to its destination location since it cannot be identified. At 612, second data is obtained for packages 610. The packages 610 can be determined as packages that have been send through the shipping network but have not been scanned as delivered. The second data for the packages 610 can be obtained from the database 602. The obtained second data at 612 can be substantially the same as the described obtained second data at 210 of FIG. 2A. The packages 610 can be determined as packages that were scanned within an expected time and location proximity to the location of the first package 605.

In some implementations, operations 607 and 612 can be performed either substantially in parallel, or sequentially. At 615, first and second data are evaluated. The type of the data that is collected can be determined. For example, it can be determined whether image data is part of the obtained data and whether such image data is with high or low resolution. At 620, a current candidate set of packages is determined to be evaluated to determine a match for the first package 605. The current candidate set of packages can be all or a part of the packages 607. In some implementations, the current candidate set can be determined based on the packages 610, where the packages 610 can be evaluated to exclude packages that has a location and/or time of latest scanning that is associated with lower expectations to be a match for the first package 605.

At 625, an available identification algorithm is determined to be applied to identify a match for the first package 605. In some implementations, a list of identification algorithms can be defined, or provides as input 627. In some implementations, the available identification algorithms can include the different identification algorithms discussed in relation to FIG. 2B.

At 630, it is determined whether the available algorithms include a weight identification algorithm (e.g., corresponding to the first example algorithms at 231 of FIG. 2B). If the weight identification algorithm is part of the available identification algorithms, at 640, the current candidate set is filtered to determine a new candidate set that includes only packages that are within a threshold range of the weight of the first package 605. At 650, the weight identification algorithm is removed from the list of available identification algorithms for application to identify the first package 605. The method 600 proceed to 615, where first and second data is evaluated. For example, only data related to the filtered candidate set of packages is determined as relevant part from the second data for further processing. The method 600 can iterate over the steps 615 to 630. After a first application of a weight identification algorithm, the method 600 can evaluate at 630 that the weight identification algorithm is not available and proceed at 655. A computational expense of each of the algorithms part of the list of the available algorithms can be determined. The computational expense can be determined based at least on the size of the current candidate set of packages (as previously determined at 640 after the application of the weight identification algorithm). At 660, an algorithm from the list of available algorithms is selected. The selected algorithm is with the lowest computational expense. At 670, the selected algorithm at 660 is applied to determine a new candidate set, and the already applied algorithm is removed from the list of available algorithms. The process can proceed at 615 to evaluate the relevant data corresponding to the newly determined candidate set, and process the data for that set according to a new identification algorithm that can be selected based on the computation expenses of the rest of the algorithms. In some implementations, computational expense can vary based on the type and quality of the first and second data, and the number of the packages 612 and the number of the packages in the new candidate set. Thus, each time a new candidate set is determined for application of a subsequent algorithm, the computation expense for the rest of the available algorithms can change.

In some implementations, applying one or more identification algorithms (e.g., weight identification algorithm 630, or other identification algorithm as selected at 660) includes evaluating the first data 607 and at least a portion of the second data 612 based on a respective one or more characteristics of the first package 605. Based on the evaluation of the first data and the second data, a set of packages are determined as a candidate set of packages that match the first package based on the respective one or more characteristics.

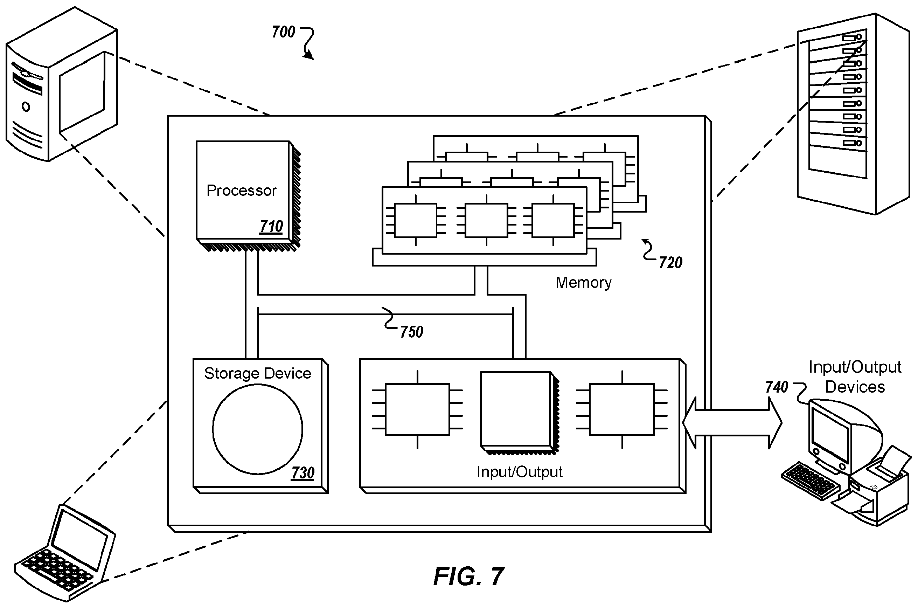

Referring now to FIG. 7, a schematic diagram of an example computing system 700 is provided. The system 700 can be used for the operations described in association with the implementations described herein. For example, the system 700 may be included in any or all of the server components discussed herein. The system 700 includes a processor 710, a memory 720, a storage device 730, and an input/output device 740. The components 710, 720, 730, 740 are interconnected using a system bus 750. The processor 710 is capable of processing instructions for execution within the system 700. In some implementations, the processor 710 is a single-threaded processor. In some implementations, the processor 710 is a multi-threaded processor. The processor 710 is capable of processing instructions stored in the memory 720 or on the storage device 730 to display graphical information for a user interface on the input/output device 740.

The memory 720 stores information within the system 700. In some implementations, the memory 720 is a computer-readable medium. In some implementations, the memory 720 is a volatile memory unit. In some implementations, the memory 720 is a non-volatile memory unit. The storage device 730 is capable of providing mass storage for the system 700. In some implementations, the storage device 730 is a computer-readable medium. In some implementations, the storage device 730 may be a hard disk device, an optical disk device, or a tape device. The input/output device 740 provides input/output operations for the system 700. In some implementations, the input/output device 740 includes a keyboard and/or pointing device. In some implementations, the input/output device 740 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random-access memory or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

A number of implementations of the present disclosure have been described. Nevertheless, other implementations are within the scope of the following claims.

## Claims

1. A computer-implemented method executed by one or more processors, the method comprising:
obtaining (205) first data for a first package within a shipping network, wherein the first package includes a label that is damaged and prevents automatic identification of the first package based on the label;
obtaining (215) second data for a plurality of packages within the shipping network;
identifying (220) a particular package from the plurality of packages that matches the first package by applying a plurality of identification algorithms in a sequence to the first data and the second data,
wherein applying the plurality of identification algorithms includes obtaining as output from each algorithm a subset of possible matching packages from among a set of packages of the plurality of packages that were identified as matching from a previous applied identification algorithm in the sequence, the possible matches including packages identified by the plurality of identification algorithms as having one or more characteristics similar to the first package,
wherein at each step in the sequence, a respective set of data from the second data for the plurality of packages is evaluated to obtain a respective subset of possible matching packages, wherein the respective set of data from the second data is associated with i) a respective characteristic of the first package that is evaluated and ii) a previously obtained subset of packages from the plurality of packages at a previous step in the sequence that matches the first package according to a previously evaluated characteristic of the first package, and
wherein the plurality of identification algorithms is ordered in the sequence according to increasing computational complexity determined based at least on a number of packages provided as input for the identification algorithm from a previous iteration; and
using (225) information from a label of the particular package to route the first package through the shipping network.

2. The method of claim 1, wherein identifying the particular package comprises:
identifying, based on providing an image of the first packages and images of the subset of possible matches as input to a machine learning model trained for image recognition, the particular package that matches the first package.

3. The method of claim 1, wherein identifying the particular package comprises evaluating the first data and the second data by applying a first algorithm of the plurality of identification algorithms, wherein applying the first algorithm comprises:
matching a first portion of the first data with a first portion of the second data, both first portions associated with a first characteristic from a set of characteristics of the first package; and
in response to the matching, determining a first subset of the plurality of packages that substantially match the first package according to the first characteristic,
wherein in response to determining that the first subset of the plurality of packages comprises a set of packages within a predetermined threshold number, providing the first subset as input to a machine learning model to identify the particular package that matches the first package from the subset, wherein the machine learning model is trained to identify the particular package based on image recognition.

4. The method of claim 1, wherein at each step in the sequence, a characteristic of the first package is evaluated, wherein the characteristic is selected from a group consisting of package weight, package colors, package scan order, package dimensions, outer surface markings, and expected package shipping route, and wherein a respective characteristic is selected for determining an identification algorithm for evaluation of the first data and second data based on the respective characteristic.

5. The method of claim 1, wherein the first data and the second data are collected for a set of characteristics of packages routed through the shipping network and associated with a respective location at the shipping network, optionally wherein applying the plurality of identification algorithms comprises evaluating the first data and the second data based on a respective one or more characteristics of the first package, and wherein based on the evaluation of the first data and the second data, a set of packages are determined as a candidate set of packages that match the first package based on the respective one or more characteristics.

6. The method of claim 1, wherein applying the plurality of identification algorithms comprises applying at least one of:
i) a package weight analysis that comprises
comparing a weight of the first package included in the first data with weights of other packages included in the second data, and
excluding from the subset of possible matches any packages within the plurality of packages having a respective weight that does not match the weight of the first package within weight threshold range defined around the weight of the first package;
ii) a package scan order analysis that comprises:
comparing an order of loading the first package into a shipping vehicle or shipping container with unloading orders of other packages of the plurality of packages from the shipping vehicle or shipping container, and
excluding from the subset of possible matches any packages within the plurality of packages having a respective unloading order that is not within a threshold range of an expected unloading order for the first package based on the order of loading the first package into a shipping vehicle or shipping container;
iii) a package color analysis that comprises:
comparing a first set of colors present within an image of the first package with sets of colors present within images of other packages of the plurality of packages, and
excluding from the subset of possible matches any packages within the plurality of packages having a respective set of colors outside a threshold similarity value to the first set of colors present within the image of the first package;
iv) a package dimension analysis that comprises:
comparing a first set of package dimensions determined from an image of the first package with sets of package dimensions determined from images of other packages of the plurality of packages, and
excluding from the subset of possible matches any packages within the plurality of packages having a respective set of package dimensions outside a threshold dimension similarity value to the first set of package dimensions determined from the image of the first package;
v) a distinguishing feature analysis that comprises:
identifying a first set of one or more features on the first package from an image of the first package, the features including one or more of marks, scratches, holes, or text,
comparing the first set of one or more features with images of other packages of the plurality of packages, and
excluding from the subset of possible matches any packages within the plurality of packages that do not have at least one of the one or more of the features detected on the first package; or
vi) a shipping route analysis that comprises:
obtaining a location of a shipping facility within the shipping network where the first package was identified as having the label that is damaged;
determining possible delivery patterns for other packages of the plurality of packages, and
excluding from the subset of possible matches any packages within the plurality of packages that do not include the location within a respective expected delivery pattern.

7. The method of claim 6, wherein applying the plurality of identification algorithms comprises applying the package color analysis, and wherein comparing the first set of colors present within an image of the first package with sets of colors present within images of other packages of the plurality of packages comprises determining Bhattacharyya distances between pixel values of the image of the first package with respective pixel values of the images of the other packages, and
wherein excluding from the subset of possible matches any packages within the plurality of packages having the respective set of colors outside the threshold similarity value to the first set of colors present within the image of the first package comprises excluding from the subset of possible matches any packages within the plurality of packages having a respective Bhattacharyya distance greater than a threshold Bhattacharyya distance.

8. The method of claim 6, wherein comparing the first set of colors present within an image of the first package with sets of colors present within images of other packages of the plurality of packages comprises identifying regions within the images of the other packages containing package labels and ignoring pixels in the regions when performing the comparison.

9. The method of claim 6, wherein applying the plurality of identification algorithms comprises applying the package color analysis, and wherein comparing the first set of colors present within an image of the first package with sets of colors present within images of other packages of the plurality of packages comprises:
identifying label regions within the images of the other packages which include package labels; and
comparing a respective label region within each of the images of the other package to a region within the image of the first package including a location on the first package that is positioned similar to a location of the respective label region and, thereby, determine whether the region within the image of the first package includes any indicia of damage.

10. The method of claim 6, wherein applying the plurality of identification algorithms comprises applying the package dimension analysis, and wherein the package dimension analysis further comprises:
determining the first set of package dimensions from the image of the first package by projecting a set of three-dimensional package models onto the image of the first package to identify a best fit between one of the set of the three-dimensional package models and the first package within the image of the first package; and
applying dimensions of the one of the set of the three-dimensional package models as the first set of package dimensions.

11. The method of claim 6, wherein applying the plurality of identification algorithms comprises applying the shipping route analysis, and wherein determining the expected delivery patterns for other packages comprises:
determining the other packages from the plurality of package as packages that are associated with respective locations of shipping facilities within the shipping network that are with a direct shipping connection with the location of the first package or with a single intermediate location between a respective location of a package from the other package and the location of the first package.

12. The method of claim 1, wherein the shipping network is a network graph including a plurality of nodes representing locations to deliver and pick-up packages, wherein the network graph includes a plurality of direction edges representing connections between pairs of locations, wherein based on the network graph, a plurality of routes connecting at least some of the nodes is defined.

13. The method of claim 1, wherein identifying the particular package from the plurality of packages comprises
identifying, based on providing an image of the first packages from the first data and images of the subset of possible matches determined after applying the plurality of identification algorithms as input to a machine learning model, the particular package that matches the first package.

14. A system comprising:
one or more computing devices; and
one or more computer-readable storage devices coupled to the one or more computing devices and having instructions stored thereon which, when executed by the one or more computing devices, cause the one or more computing devices to perform operations according to the methods of any one of claims 1 to 13.

15. One or more computer storage media storing instructions that when executed by one or more processors cause the one or more processors to perform operations of the respective method of any one of claims 1 to 13.

## Patentansprüche

1. Computerimplementiertes Verfahren, das von einem oder mehreren Prozessoren ausgeführt wird, das Verfahren umfassend:
Erhalten (205) erster Daten für ein erstes Paket innerhalb eines Versandnetzwerks, wobei das erste Paket ein Etikett aufweist, das beschädigt ist und eine automatische Identifizierung des ersten Pakets basierend auf dem Etikett verhindert;
Erhalten (215) zweiter Daten für eine Vielzahl von Paketen innerhalb des Versandnetzwerks;
Identifizieren (220) eines bestimmten Pakets aus der Vielzahl von Paketen, das mit dem ersten Paket übereinstimmt, durch Anwenden einer Vielzahl von Identifikationsalgorithmen in einer Sequenz auf die ersten Daten und die zweiten Daten,
wobei das Anwenden der Vielzahl von Identifikationsalgorithmen das Erhalten, als Ausgabe von jedem Algorithmus, einer Teilmenge möglicher übereinstimmender Pakete aus einer Menge von Paketen der Vielzahl von Paketen umfasst, die von einem zuvor in der Sequenz angewandten Identifikationsalgorithmus als übereinstimmend identifiziert wurden, wobei die möglichen Übereinstimmungen Pakete einschließen, die von der Vielzahl von Identifikationsalgorithmen als Pakete mit einem oder mehreren dem ersten Paket ähnlichen Merkmalen identifiziert wurden,
wobei bei jedem Schritt in der Sequenz ein jeweiliger Datensatz aus den zweiten Daten für die Vielzahl von Paketen ausgewertet wird, um eine jeweilige Teilmenge möglicher übereinstimmender Pakete zu erhalten, wobei der jeweilige Datensatz aus den zweiten Daten zu i) einem jeweiligen ausgewerteten Merkmal des ersten Pakets, und ii) einer zuvor erhaltenen Teilmenge von Paketen aus der Vielzahl von Paketen aus einem vorherigen Schritt in der Sequenz, die gemäß einem zuvor ausgewerteten Merkmal des ersten Pakets mit dem ersten Paket übereinstimmt, zugeordnet ist, und
wobei die Vielzahl von Identifikationsalgorithmen in der Sequenz gemäß zunehmender rechnerischer Komplexität angeordnet ist, die zumindest basierend auf einer Anzahl von Paketen bestimmt wird, die dem Identifikationsalgorithmus aus einer vorherigen Iteration als Eingabe bereitgestellt werden; und
Verwenden (225) von Informationen von einem Etikett des bestimmten Pakets, um das erste Paket durch das Versandnetzwerk zu routen.

2. Verfahren nach Anspruch 1, wobei das Identifizieren des bestimmten Pakets umfasst:
Identifizieren des bestimmten Pakets, das mit dem ersten Paket übereinstimmt, basierend auf dem Bereitstellen eines Bildes des ersten Pakets und von Bildern der Teilmenge möglicher Übereinstimmungen als Eingabe für ein für Bilderkennung trainiertes Maschinenlernmodell.

3. Verfahren nach Anspruch 1, wobei das Identifizieren des bestimmten Pakets das Auswerten der ersten Daten und der zweiten Daten durch Anwenden eines ersten Algorithmus der Vielzahl von Identifikationsalgorithmen umfasst, wobei das Anwenden des ersten Algorithmus umfasst:
Abgleichen eines ersten Teils der ersten Daten mit einem ersten Teil der zweiten Daten, wobei beide ersten Teile einem ersten Merkmal aus einer Menge von Merkmalen des ersten Pakets zugeordnet sind; und
als Reaktion auf den Abgleich, Bestimmen einer ersten Teilmenge der Vielzahl von Paketen, die gemäß dem ersten Merkmal im Wesentlichen mit dem ersten Paket übereinstimmen,
wobei, als Reaktion auf das Bestimmen, dass die erste Teilmenge der Vielzahl von Paketen eine Menge von Paketen innerhalb einer vorbestimmten Schwellenanzahl umfasst, Bereitstellen der ersten Teilmenge als Eingabe für ein Maschinenlernmodell, um aus der Teilmenge das bestimmte Paket zu identifizieren, das mit dem ersten Paket übereinstimmt, wobei das Maschinenlernmodell zum Identifizieren des bestimmten Pakets basierend auf Bilderkennung trainiert ist.

4. Verfahren nach Anspruch 1, wobei in jedem Schritt der Sequenz ein Merkmal des ersten Pakets ausgewertet wird, wobei das Merkmal aus einer Gruppe ausgewählt ist, die aus Paketgewicht, Paketfarben, Paketscanreihenfolge, Paketabmessungen, äußeren Oberflächenkennzeichnungen und einer erwarteten Versandroute des Pakets besteht, und wobei ein jeweiliges Merkmal zur Bestimmung eines Identifikationsalgorithmus für die Auswertung der ersten Daten und der zweiten Daten basierend auf dem jeweiligen Merkmal ausgewählt wird.

5. Verfahren nach Anspruch 1, wobei die ersten Daten und die zweiten Daten für eine Menge von Merkmalen von Paketen erfasst werden, die durch das Versandnetzwerk geroutet werden und einem jeweiligen Ort im Versandnetzwerk zugeordnet sind, wobei optional das Anwenden der Vielzahl von Identifikationsalgorithmen das Auswerten der ersten Daten und der zweiten Daten basierend auf einem jeweiligen einen oder mehreren Merkmalen des ersten Pakets umfasst, und wobei basierend auf der Auswertung der ersten Daten und der zweiten Daten eine Menge von Paketen als Kandidatenmenge von Paketen bestimmt wird, die basierend auf dem jeweiligen einen oder mehreren Merkmalen mit dem ersten Paket übereinstimmen.

6. Verfahren nach Anspruch 1, wobei das Anwenden der Vielzahl von Identifikationsalgorithmen das Anwenden von mindestens einem der Folgenden umfasst:
i) einer Paketgewichtsanalyse, die umfasst:
Vergleichen eines in den ersten Daten enthaltenen Gewichts des ersten Pakets mit Gewichten anderer Pakete, die in den zweiten Daten enthalten sind; und
Ausschließen aus der Teilmenge möglicher Übereinstimmungen aller Pakete innerhalb der Vielzahl von Paketen, die ein jeweiliges Gewicht aufweisen, das nicht innerhalb eines um das Gewicht des ersten Pakets definierten Gewichtsschwellenbereichs mit dem Gewicht des ersten Pakets übereinstimmt;
ii) einer Analyse der Paketscanreihenfolge, die umfasst:
Vergleichen einer Reihenfolge des Beladens des ersten Pakets in ein Versandfahrzeug oder einen Versandcontainer mit Entladereihenfolgen anderer Pakete der Vielzahl von Paketen aus dem Versandfahrzeug oder dem Versandcontainer; und
Ausschließen aus der Teilmenge möglicher Übereinstimmungen aller Pakete innerhalb der Vielzahl von Paketen, die eine jeweilige Entladereihenfolge aufweisen, die nicht innerhalb eines Schwellenbereichs einer erwarteten Entladereihenfolge für das erste Paket liegt, basierend auf der Reihenfolge des Beladens des ersten Pakets in das Versandfahrzeug oder den Versandcontainer;
iii) einer Paketfarbenanalyse, die umfasst:
Vergleichen einer ersten Menge von Farben, die in einem Bild des ersten Pakets vorhanden sind, mit Mengen von Farben, die in Bildern anderer Pakete der Vielzahl von Paketen vorhanden sind; und
Ausschließen aus der Teilmenge möglicher Übereinstimmungen aller Pakete innerhalb der Vielzahl von Paketen, die eine jeweilige Menge von Farben außerhalb eines Ähnlichkeitsschwellenwerts zu der ersten Menge von Farben aufweisen, die in dem Bild des ersten Pakets vorhanden ist;
iv) einer Paketabmessungsanalyse, die umfasst:
Vergleichen einer ersten Menge von Paketabmessungen, die aus einem Bild des ersten Pakets bestimmt wurden, mit Mengen von Paketabmessungen, die aus Bildern anderer Pakete der Vielzahl von Paketen bestimmt wurden; und
Ausschließen aus der Teilmenge möglicher Übereinstimmungen aller Pakete innerhalb der Vielzahl von Paketen, die eine jeweilige Menge von Paketabmessungen außerhalb eines Abmessungs-Ähnlichkeitsschwellenwerts zu der ersten Menge von Paketabmessungen aufweisen, die aus dem Bild des ersten Pakets bestimmt wurde;
v) einer Analyse unterscheidender Merkmale, die umfasst:
Identifizieren einer ersten Menge von einem oder mehreren Merkmalen an dem ersten Paket aus einem Bild des ersten Pakets, wobei die Merkmale eines oder mehrerer von Markierungen, Kratzern, Löchern oder Text umfassen;
Vergleichen der ersten Menge des einen oder der mehreren Merkmale mit Bildern anderer Pakete der Vielzahl von Paketen; und
Ausschließen aus der Teilmenge möglicher Übereinstimmungen aller Pakete innerhalb der Vielzahl von Paketen, die nicht mindestens eines der einen oder der mehreren an dem ersten Paket erkannten Merkmale aufweisen; oder
vi) einer Versandroutenanalyse, die umfasst:
Erhalten eines Orts einer Versandeinrichtung innerhalb des Versandnetzwerks, an dem das erste Paket als ein Paket identifiziert wurde, dessen Etikett beschädigt ist;
Bestimmen möglicher Liefermuster für andere Pakete der Vielzahl von Paketen; und
Ausschließen aus der Teilmenge möglicher Übereinstimmungen aller Pakete innerhalb der Vielzahl von Paketen, die den Ort nicht innerhalb eines jeweiligen erwarteten Liefermusters umfassen.

7. Verfahren nach Anspruch 6, wobei das Anwenden der Vielzahl von Identifikationsalgorithmen das Anwenden der Paketfarbenanalyse umfasst, und wobei das Vergleichen der ersten Menge von Farben, die in einem Bild des ersten Pakets vorhanden sind, mit Mengen von Farben, die in Bildern anderer Pakete der Vielzahl von Paketen vorhanden sind, das Bestimmen von Bhattacharyya-Abständen zwischen Pixelwerten des Bildes des ersten Pakets und jeweiligen Pixelwerten der Bilder der anderen Pakete umfasst, und wobei das Ausschließen aus der Teilmenge möglicher Übereinstimmungen aller Pakete innerhalb der Vielzahl von Paketen, die die jeweilige Menge von Farben außerhalb des Ähnlichkeitsschwellenwerts zu der ersten Menge von Farben aufweisen, die in dem Bild des ersten Pakets vorhanden ist, das Ausschließen aus der Teilmenge möglicher Übereinstimmungen aller Pakete innerhalb der Vielzahl von Paketen umfasst, die einen jeweiligen Bhattacharyya-Abstand aufweisen, der größer als ein Bhattacharyya-Schwellenabstand ist.

8. Verfahren nach Anspruch 6, wobei das Vergleichen der ersten Menge von Farben, die in einem Bild des ersten Pakets vorhanden sind, mit Mengen von Farben, die in Bildern anderer Pakete der Vielzahl von Paketen vorhanden sind, das Identifizieren von Regionen innerhalb der Bilder der anderen Pakete, die Paketetiketten enthalten, und das Ignorieren von Pixeln in den Regionen beim Durchführen des Vergleichs umfasst.

9. Verfahren nach Anspruch 6, wobei das Anwenden der Vielzahl von Identifikationsalgorithmen das Anwenden der Paketfarbenanalyse umfasst, und wobei das Vergleichen der ersten Menge von Farben, die in einem Bild des ersten Pakets vorhanden sind, mit Mengen von Farben, die in Bildern anderer Pakete der Vielzahl von Paketen vorhanden sind, umfasst:
Identifizieren von Etikettenregionen innerhalb der Bilder der anderen Pakete, die Paketetiketten enthalten; und
Vergleichen einer jeweiligen Etikettenregion innerhalb jedes der Bilder des anderen Pakets mit einer Region innerhalb des Bildes des ersten Pakets, die einen Ort auf dem ersten Paket umfasst, der ähnlich zu einem Ort der jeweiligen Etikettenregion positioniert ist, und dadurch Bestimmen, ob die Region innerhalb des Bildes des ersten Pakets irgendwelche Anzeichen einer Beschädigung umfasst.

10. Verfahren nach Anspruch 6, wobei das Anwenden der Vielzahl von Identifikationsalgorithmen das Anwenden der Paketabmessungsanalyse umfasst, und wobei die Paketabmessungsanalyse ferner umfasst:
Bestimmen der ersten Menge von Paketabmessungen aus dem Bild des ersten Pakets durch Projizieren einer Menge von dreidimensionalen Paketmodellen auf das Bild des ersten Pakets, um eine beste Anpassung zwischen einem der dreidimensionalen Paketmodelle aus der Menge und dem ersten Paket innerhalb des Bildes des ersten Pakets zu identifizieren; und
Anwenden der Abmessungen des einen der dreidimensionalen Paketmodelle aus der Menge als die erste Menge von Paketabmessungen.

11. Verfahren nach Anspruch 6, wobei das Anwenden der Vielzahl von Identifikationsalgorithmen das Anwenden der Versandroutenanalyse umfasst, und wobei das Bestimmen der erwarteten Liefermuster für andere Pakete umfasst:
Bestimmen der anderen Pakete aus der Vielzahl von Paketen als Pakete, die jeweiligen Orten von Versandeinrichtungen innerhalb des Versandnetzwerks zugeordnet sind, die entweder eine direkte Versandverbindung mit dem Ort des ersten Pakets aufweisen oder bei denen ein einzelner Zwischenort zwischen einem jeweiligen Ort eines Pakets des anderen Pakets und dem Ort des ersten Pakets liegt.

12. Verfahren nach Anspruch 1, wobei das Versandnetzwerk ein Netzwerkgraph ist, der eine Vielzahl von Knoten umfasst, die Orte zum Zustellen und Abholen von Paketen darstellen, wobei der Netzwerkgraph eine Vielzahl von gerichteten Kanten umfasst, die Verbindungen zwischen Paaren von Orten darstellen, und wobei basierend auf dem Netzwerkgraphen eine Vielzahl von Routen definiert ist, die mindestens einige der Knoten miteinander verbinden.

13. Verfahren nach Anspruch 1, wobei das Identifizieren des bestimmten Pakets aus der Vielzahl von Paketen umfasst:
Identifizieren des bestimmten Pakets, das mit dem ersten Paket übereinstimmt, basierend auf dem Bereitstellen, als Eingabe für ein Maschinenlernmodell, eines Bildes des ersten Pakets aus den ersten Daten und von Bildern der Teilmenge möglicher Übereinstimmungen, die nach dem Anwenden der Vielzahl von Identifikationsalgorithmen bestimmt wurden.

14. System, umfassend:
eine oder mehrere Computervorrichtungen; und
eine oder mehrere computerlesbare Speichervorrichtungen, die mit der einen oder den mehreren Computervorrichtungen gekoppelt sind und darauf gespeicherte Anweisungen aufweisen, die bei Ausführung durch die eine oder die mehreren Computervorrichtungen die eine oder die mehreren Computervorrichtungen veranlassen, Operationen gemäß den Verfahren nach einem der Ansprüche 1 bis 13 durchzuführen.

15. Ein oder mehrere Computerspeichermedien, auf denen Anweisungen gespeichert sind, die bei Ausführung durch einen oder mehrere Prozessoren den einen oder die mehreren Prozessoren veranlassen, Operationen des jeweiligen Verfahrens nach einem der Ansprüche 1 bis 13 durchzuführen.

## Revendications

1. Procédé mis en œuvre par ordinateur exécuté par un ou plusieurs processeurs, le procédé comprenant :
l'obtention (205) de premières données pour un premier colis à l'intérieur d'un réseau d'expédition, dans lequel le premier colis inclut une étiquette qui est endommagée et empêche l'identification automatique du premier colis sur la base de l'étiquette ;
l'obtention (215) de secondes données pour une pluralité de colis à l'intérieur du réseau d'expédition ;
l'identification (220) d'un colis particulier, parmi la pluralité de colis, qui correspond au premier colis par le biais de l'application d'une pluralité d'algorithmes d'identification dans une séquence sur les premières données et les secondes données,
dans lequel l'application de la pluralité d'algorithmes d'identification inclut l'obtention, en tant que sortie de chaque algorithme, d'un sous-ensemble de colis correspondants possibles parmi un ensemble de colis de la pluralité de colis qui ont été identifiés comme correspondant, provenant d'un algorithme d'identification appliqué auparavant dans la séquence, les correspondances possibles incluant des colis identifiés par la pluralité d'algorithmes d'identification comme ayant une ou plusieurs caractéristiques similaires au premier colis,
dans lequel, à chaque étape dans la séquence, un ensemble respectif de données provenant des secondes données pour la pluralité de colis est évalué pour obtenir un sous-ensemble respectif de colis correspondants possibles, dans lequel l'ensemble respectif de données provenant des secondes données est associé i) à une caractéristique respective du premier colis qui est évalué, et ii) à un sous-ensemble obtenu auparavant de colis, parmi la pluralité de colis à une étape précédente dans la séquence, qui correspond au premier colis selon une caractéristique évaluée auparavant du premier colis, et dans lequel la pluralité d'algorithmes d'identification est mise en ordre dans la séquence selon une complexité de calcul croissante déterminée sur la base au moins d'un nombre de colis fourni en tant qu'entrée pour l'algorithme d'identification en provenance d'une itération précédente ; et
l'utilisation (225) d'informations provenant d'une étiquette du colis particulier pour acheminer le premier colis à travers le réseau d'expédition.

2. Procédé de la revendication 1, dans lequel l'identification du colis particulier comprend :
l'identification, sur la base de la fourniture d'une image des premiers colis et d'images du sous-ensemble de correspondances possibles en tant qu'entrée dans un modèle d'apprentissage machine entraîné pour reconnaissance d'image, du colis particulier qui correspond au premier colis.

3. Procédé de la revendication 1, dans lequel l'identification du colis particulier comprend l'évaluation des premières données et des secondes données par le biais de l'application d'un premier algorithme de la pluralité d'algorithmes d'identification, dans lequel l'application du premier algorithme comprend :
la mise en correspondance d'une première partie des premières données avec une première partie des secondes données, les deux premières parties étant associées à une première caractéristique parmi un ensemble de caractéristiques du premier colis ; et
en réponse à la mise en correspondance, la détermination d'un premier sous-ensemble de la pluralité de colis qui correspondent sensiblement au premier colis selon la première caractéristique,
dans lequel, en réponse à la détermination que le premier sous-ensemble de la pluralité de colis comprend un ensemble de colis dans les limites d'un nombre seuil prédéterminé, la fourniture du premier sous-ensemble en tant qu'entrée dans un modèle d'apprentissage machine pour identifier le colis particulier, qui correspond au premier colis, parmi le sous-ensemble, dans lequel le modèle d'apprentissage machine est entraîné pour identifier le colis particulier sur la base de reconnaissance d'image.

4. Procédé de la revendication 1, dans lequel, à chaque étape dans la séquence, une caractéristique du premier colis est évaluée, dans lequel la caractéristique est sélectionnée parmi un groupe constitué de poids de colis, de couleurs de colis, d'un ordre de balayages de colis, de dimensions de colis, de marquages de surface extérieure, et d'un acheminement escompté d'expédition de colis, et dans lequel une caractéristique respective est sélectionnée pour déterminer un algorithme d'identification pour l'évaluation des premières données et secondes données sur la base de la caractéristique respective.

5. Procédé de la revendication 1, dans lequel les premières données et les secondes données sont collectées pour un ensemble de caractéristiques de colis acheminés à travers le réseau d'expédition et associés à un endroit respectif dans le réseau d'expédition, facultativement dans lequel l'application de la pluralité d'algorithmes d'identification comprend l'évaluation des premières données et des secondes données sur la base d'une ou de plusieurs caractéristiques respectives du premier colis, et dans lequel, sur la base de l'évaluation des premières données et des secondes données, un ensemble de colis est déterminé comme étant un ensemble candidat de colis qui correspondent au premier colis sur la base de l'une ou des plusieurs caractéristiques respectives.

6. Procédé de la revendication 1, dans lequel l'application de la pluralité d'algorithmes d'identification comprend l'application d'au moins une analyse parmi :
i) une analyse de poids de colis qui comprend
la comparaison d'un poids du premier colis inclus dans les premières données à des poids d'autres colis inclus dans les secondes données, et
l'exclusion, du sous-ensemble de correspondances possibles, de tous colis à l'intérieur de la pluralité de colis ayant un poids respectif qui ne correspond pas au poids du premier colis dans les limites d'une plage seuil de poids définie autour du poids du premier colis ;
ii) une analyse d'ordre de balayages de colis qui comprend :
la comparaison d'un ordre de chargement du premier colis dans un véhicule d'expédition ou conteneur d'expédition à des ordres de déchargement d'autres colis de la pluralité de colis depuis le véhicule d'expédition ou conteneur d'expédition, et
l'exclusion, du sous-ensemble de correspondances possibles, de tous colis à l'intérieur de la pluralité de colis ayant un ordre de déchargement respectif qui n'est pas dans les limites d'une plage seuil d'un ordre de déchargement escompté pour le premier colis, sur la base de l'ordre de chargement du premier colis dans un véhicule d'expédition ou conteneur d'expédition ;
iii) une analyse de couleurs de colis qui comprend :
la comparaison d'un premier ensemble de couleurs présentes à l'intérieur d'une image du premier colis à des ensembles de couleurs présentes à l'intérieur d'images d'autres colis de la pluralité de colis, et
l'exclusion, du sous-ensemble de correspondances possibles, de tous colis à l'intérieur de la pluralité de colis ayant un ensemble respectif de couleurs en dehors d'une valeur de similarité seuil relative au premier ensemble de couleurs présentes à l'intérieur de l'image du premier colis ;
iv) une analyse de dimensions de colis qui comprend :
la comparaison d'un premier ensemble de dimensions de colis, déterminées à partir d'une image du premier colis, à des ensembles de dimensions de colis déterminées à partir d'images d'autres colis de la pluralité de colis, et
l'exclusion, du sous-ensemble de correspondances possibles, de tous colis à l'intérieur de la pluralité de colis ayant un ensemble respectif de dimensions de colis en dehors d'une valeur de similarité de dimension seuil relative au premier ensemble de dimensions de colis déterminées à partir de l'image du premier colis ;
v) une analyse de particularités distinctives qui comprend :
l'identification d'un premier ensemble d'une ou de plusieurs particularités sur le premier colis à partir d'une image du premier colis, les particularités incluant un ou plusieurs éléments parmi des marques, des rayures, des trous, ou un texte,
la comparaison du premier ensemble d'une ou de plusieurs particularités à des images d'autres colis de la pluralité de colis, et
l'exclusion, du sous-ensemble de correspondances possibles, de tous colis à l'intérieur de la pluralité de colis qui n'ont pas au moins une de l'une ou des plusieurs des particularités détectées sur le premier colis ; ou
vi) une analyse d'acheminements d'expédition qui comprend :
l'obtention d'un endroit d'une installation d'expédition à l'intérieur du réseau d'expédition où le premier colis a été identifié comme ayant l'étiquette qui est endommagée ;
la détermination de formes de livraison possibles pour d'autres colis de la pluralité de colis, et
l'exclusion, du sous-ensemble de correspondances possibles, de tous colis à l'intérieur de la pluralité de colis qui n'incluent pas l'endroit à l'intérieur d'une forme de livraison escomptée respective.

7. Procédé de la revendication 6, dans lequel l'application de la pluralité d'algorithmes d'identification comprend l'application de l'analyse de couleurs de colis, et dans lequel la comparaison du premier ensemble de couleurs présent à l'intérieur d'une image du premier colis à des ensembles de couleurs présentes à l'intérieur d'images d'autres colis de la pluralité de colis comprend la détermination de distances de Bhattacharyya entre des valeurs de pixel de l'image du premier colis avec des valeurs de pixel respectives des images des autres colis, et
dans lequel l'exclusion, du sous-ensemble de correspondances possibles, de tous colis à l'intérieur de la pluralité de colis ayant l'ensemble respectif de couleurs en dehors de la valeur de similarité seuil relative au premier ensemble de couleurs présentes à l'intérieur de l'image du premier colis comprend l'exclusion, du sous-ensemble de correspondances possibles, de tous colis à l'intérieur de la pluralité de colis ayant une distance de Bhattacharyya respective supérieure à une distance de Bhattacharyya seuil.

8. Procédé de la revendication 6, dans lequel la comparaison du premier ensemble de couleurs présentes à l'intérieur d'une image du premier colis à des ensembles de couleurs présentes à l'intérieur d'images d'autres colis de la pluralité de colis comprend l'identification de régions à l'intérieur des images des autres colis contenant des étiquettes de colis et la non-prise en compte de pixels dans les régions lors de la réalisation de la comparaison.

9. Procédé de la revendication 6, dans lequel l'application de la pluralité d'algorithmes d'identification comprend l'application de l'analyse de couleurs de colis, et dans lequel la comparaison du premier ensemble de couleurs présentes à l'intérieur d'une image du premier colis à des ensembles de couleurs présentes à l'intérieur d'images d'autres colis de la pluralité de colis comprend :
l'identification de régions d'étiquette à l'intérieur des images des autres colis qui incluent des étiquettes de colis ; et
la comparaison d'une région d'étiquette respective à l'intérieur de chacune des images de l'autre colis à une région à l'intérieur de l'image du premier colis incluant un endroit sur le premier colis qui est positionné de façon similaire à un endroit de la région d'étiquette respective et, ainsi, la détermination du fait que la région à l'intérieur de l'image du premier colis inclut ou non de quelconques indications d'endommagement.

10. Procédé de la revendication 6, dans lequel l'application de la pluralité d'algorithmes d'identification comprend l'application de l'analyse de dimensions de colis, et dans lequel l'analyse de dimensions de colis comprend en outre :
la détermination du premier ensemble de dimensions de colis à partir de l'image du premier colis en projetant un ensemble de modèles de colis tridimensionnels sur l'image du premier colis pour identifier un ajustement optimal entre un de l'ensemble des modèles de colis tridimensionnels et le premier colis à l'intérieur de l'image du premier colis ; et
l'application de dimensions de l'un de l'ensemble des modèles de colis tridimensionnels en tant que premier ensemble de dimensions de colis.

11. Procédé de la revendication 6, dans lequel l'application de la pluralité d'algorithmes d'identification comprend l'application de l'analyse d'acheminements d'expédition, et dans lequel la détermination des formes de livraison escomptées pour d'autres colis comprend :
la détermination des autres colis, parmi la pluralité de colis, comme étant des colis qui sont associés à des endroits respectifs d'installations d'expédition à l'intérieur du réseau d'expédition qui ont une liaison d'expédition directe avec l'endroit du premier colis ou à un seul endroit intermédiaire entre un endroit respectif d'un colis parmi l'autre colis et l'endroit du premier colis.

12. Procédé de la revendication 1, dans lequel le réseau d'expédition est un graphe de réseau incluant une pluralité de nœuds représentant des endroits pour livrer et recueillir des colis, dans lequel le graphe de réseau inclut une pluralité de frontières de direction représentant des liaisons entre des paires d'endroits, dans lequel, sur la base du graphe de réseau, une pluralité d'acheminements reliant au moins certains des nœuds est définie.

13. Procédé de la revendication 1, dans lequel l'identification du colis particulier parmi la pluralité de colis comprend
l'identification, sur la base de la fourniture d'une image des premiers colis provenant des premières données et d'images du sous-ensemble de correspondances possibles déterminées après l'application de la pluralité d'algorithmes d'identification en tant qu'entrée dans un modèle d'apprentissage machine, du colis particulier qui correspond au premier colis.

14. Système, comprenant :
un ou plusieurs dispositifs informatiques ; et
un ou plusieurs dispositifs de stockage lisibles par ordinateur couplés à l'un ou aux plusieurs dispositifs informatiques et ayant des instructions stockées sur celui ou ceux-ci qui, lorsqu'elles sont exécutées par l'un ou les plusieurs dispositifs informatiques, amènent l'un ou les plusieurs dispositifs informatiques à réaliser des opérations selon les procédés de l'une quelconque des revendications 1 à 13.

15. Support ou supports de stockage pour ordinateur, stockant des instructions qui, lorsqu'elles sont exécutées par un ou plusieurs processeurs, amènent l'un ou les plusieurs processeurs à réaliser des opérations du procédé respectif de l'une quelconque des revendications 1 à 13.
